# EUROPEAN PATENT APPLICATION

(11) **EP 1 980 949 A1**
(43) Date of publication of application: **15.10.2008**
(21) Application number: 06712690.4
(22) Date of filing: 31.01.2006
(51) Int. Cl.: G06F 13/00

(54) **CONTENT DISTRIBUTION METHOD AND DEVICE IN TELECONFERENCE**

(71) Applicant: FUJITSU LIMITED, Kawasaki-shi, Kanagawa 211-8588 (JP)
(72) Inventor: YAMAZAKI, Kinya, Kawasaki-shi, Kanagawa 211-8588 (JP); IWAYAMA, Noboru, Kawasaki-shi, Kanagawa 211-8588 (JP)
(74) Representative: Weihs, Bruno Konrad
(86) International application number: PCT/JP2006/301547
(87) International publication number: WO 2007/088589

(57) **Abstract**

An object is to appropriately deliver content data to users participating in a teleconference. For that purpose, following steps are executed: a step of receiving a URI of the content data to be delivered to participating users participating in the teleconference from the user terminal of a specific participating user; a step of obtaining the content data corresponding to the URI from a server relating to the received URI, and storing the content data into a content data storage device; and a step of transmitting the content data stored in the content data storage device to the user terminals of the participating users. Only by designating the URI, the server for the teleconference obtains and transmits the content data corresponding to the URI . Therefore, it is possible to use the content data regardless of the access authority of the participating users.

## Description

### [Technical Field]

This invention relates to a content delivery technique in a teleconference.

### [Background Technology]

For example, in "A Proposal of Service for Communication Activation, "Presence Club". Proceedings of IEICE General Conference in 2003, B-6-184, Michio Shimomura, Kazumi Chiba, and Ken Ojiri", following matters are disclosed for a network service using presence information. Namely, when receiving a presence registration request including a photo and text from a cellular phone with a camera, a mail server stores the photo, and sends a presence registration request including a photo Uniform Resource Locator (URL) and the text to a presence server. The presence server updates the presence by the photo URL and the text in response to receipt of the presence registration request. Then, the presence server sends, as a presence notification, the photo URL and the text to a PC or Personal Digital Assistant (PDA). Then, the PC or PDA sends a photo acquisition request to the mail server by using the photo URL, and acquires the photo data from the mail server.

In addition, JP-A-2004-13303 discloses a technique, which applies the instance messaging (IM) technique to a teleconference. Specifically, presence information of each IM client, usable media and user information are managed by an IM server, and each IM client can obtain such information. When carrying out a text chat, the IM server manages the connection between each participating IM client and the IM server, and merges text data from each participating IM client to deliver the merged result to each participating IM client. When carrying out a voice chat, an AP server manages the connection between each participating IM client and an MD server, and the MD server mixes the voice from each participating IM client except a target IM client to deliver the mixed result to the target IM client. This processing is carried out for each participating IM client. However, this publication only indicates a typical usage method of the presence technique (a usage method of indicating states of clients such as off-line or during IM), and there is no special usage method of the presence data.

Moreover, in addition to those, publications of the presence technique include JP-A-2003-526276, JP-A-2004-533048 and JP-A-2005-500714.
Non Patent Document 1: "A Proposal of Service for Communication Activation, "Presence Club", Proceedings of IEICE General Conference in 2003, B-6-184, Michio Shimomura, Kazumi Chiba, and Ken Ojiri"
Patent Document 1: JP-A-2004-13303
Patent Document 2: JP-A-2003-526276
Patent Document 3: JP-A-2004-533048
Patent Document 4: JP-A-2005-500714

### [Summary of the Invention]

### [Problem to be solved by this Invention]

According to the aforementioned conventional art, when content data such as images is shared among users participating in a teleconference, which uses the presence technique, the URL is delivered to each user terminal. However, because the content data itself is not transmitted, it is necessary for the user himself or herself to obtain the content data by using the URAL.

However, when access authority to the content data is set, but, for example, some of the participating users in the teleconference do not have the access authority, it is impossible to share the content data with all of the participating users only by the URL.

In addition, the user terminals of the participating users in the teleconference are not always the same type, and according to the user terminals, the content data may not be treated as it is.

Furthermore, when the content data such as the images is treated, the load of the server side may be a problem.

Therefore, an object of this invention is to provide a new technique to appropriately deliver the content data to the users participating in the teleconference.

In addition, another object of this invention is to provide a technique for delivering the content data to the users participating in the teleconference regardless of the access authority of the users in the receiving side.

Furthermore, still another object of this invention is to provide a new technique for delivering the content data usable for the users participating in the teleconference.

### [Means for solving the Problem]

A content delivery method in a teleconference according to this invention includes: a step of receiving a Uniform Resource Identifier (URI) of content data to be delivered to participating users participating in the teleconference, from a user terminal of a specific user; an obtaining step of obtaining content data corresponding to the URI from a server relating to the received URI, and storing the content data into a content data storage device; and a transmitting step of transmitting the content data stored in the content data storage device to the user terminals of the participating users.

Thus, only by designating the URI by the user having the content transmission right, a server for the teleconference obtains the content data corresponding to the URI, and transmits the content data to the user terminals of the participating users in the teleconference. Therefore, it is possible to use the content data regardless of the access authority. That is, the usability of the users in the teleconference is enhanced. Incidentally, when there is predetermined mutual trust between the server having the content data and the server for the teleconference, there is no problem for the access authority, completely.

Incidentally, the content delivery method may further include a confirming step of confirming whether or not said specific participating user has a content transmission right, and the aforementioned obtaining step may be executed in a case where the specific participating user has the content transmission right.

In addition, in the aforementioned transmitting step, as presence data in the teleconference, the content data stored in the content data storage device may be transmitted to the user terminals of the participating users. This is to utilize a presence delivery mechanism for the teleconference.

Furthermore, the content data delivery method according to this invention may further include: a step of receiving information concerning data usable in the user terminal of the participating user when participating in the teleconference, and storing the received information into a data storage device; and a judging step of judging based on the information concerning the data usable in the user terminal of the participating user, which is stored in the data storage device, whether or not the content data stored in the content data storage device is data usable in the user terminal of the participating user. Then, the aforementioned transmitting step may be executed for the user terminal for which affirmative judgment is made in said judging step. Thus, because the content data is not transmitted to a user terminal, which cannot use the content data, the effective use of the communication bandwidth is realized.

In addition, the content delivery method according to this invention may further include: a step of receiving information concerning data usable in the user terminal of the participating user when participating in the teleconference, and storing the received information into a data storage device; a judging step of judging based on the information concerning the data usable in the user terminal of the participating user, which is stored in the data storage device, whether or not the content data is data usable in the user terminal of the participating user; and when negative judgment is made in the judging step, a step of converting the content data into the content data usable in the user terminal of the participating user, based on the information concerning the data usable in the user terminal of the participating user, which is stored in the data storage device, and storing the converted content data into the content data storage device.

Such a conversion processing may be carried out before outputting, as the presence data to be delivered, to a presence manager, after outputting from the presence manager, or before transmitting, as data other than the presence data.

Thus, it is possible to obtain the data usable in the user terminal of the participating user. Incidentally, it is possible to adopt various modes for the conversion processing, and the conversion for each user terminal, such as a format conversion or resolution conversion, may be carried out, and the content data may be converted into a data format common to the user terminals of the participating users.

Furthermore, the aforementioned obtaining step may include: a step of transmitting an acquisition request including the URI to a virtual client; a step of obtaining, by the virtual client, the content data corresponding to the URI from the server relating to the URI included in the acquisition request; and a step of receiving the content data from the virtual client, and storing the received content data into the content data storage device. Thus, by acquiring the content data by the virtual client, the virtual client is executed as a thread other than a thread, which carries out a main processing. Therefore, it is possible to suppress the load increase in the server for the teleconference. In addition, as for the virtual client, it is possible to carry out the load distribution in other servers.

Furthermore, the content delivery method according to this invention may further include a step of receiving authentication information for the server relating to the URI from the user terminal of the participating user. In such a case, the aforementioned obtaining step may include a step of transmitting an acquisition request including the URI and the authentication information for the server relating to the URI to the virtual client; by the virtual client; a step of transmitting the authentication information to the server relating to the URI included in the acquisition request to make the server relating to the URI carry out an authentication processing, and acquiring the content data corresponding to the URI; and a step of receiving the content data from the virtual client, and storing the content data into the content data storage device. Thus, even when the server holding the content data enables only the specific user to use the content data, such a configuration can handle this case.

In addition, the content delivery method may further include a step of receiving designation information of the virtual client from the user terminal of the participating user. The participating user may designate the type of the virtual client, for example, and may specifically designate an ID of the virtual client. Furthermore, there is a case where the virtual client is automatically set based on the URI or the like by the user terminal side. In addition, there is a case where the virtual client is activated and designated by the server for the teleconference.

Incidentally, it is possible to create a program for causing a computer to execute the aforementioned content delivery method, a program for causing the conference management server or the presence server to execute the aforementioned processing and a program for causing the portable terminal to carry out the aforementioned operation. The programs are stored into a storage medium or a storage device such as, for example, a flexible disk, a CD-ROM, a magneto-optical disk, a semiconductor memory, or a hard disk. In addition, the programs may be distributed as digital signals over a network in some cases. Data under processing is temporarily stored in the storage device such as a computer memory.

### [Brief description of the drawings]

Fig. 1 is a system configuration diagram relating to a first embodiment of this invention;
Fig. 2 is a functional block diagram of a user terminal;
Fig. 3 is a functional block diagram of a user A presence manager;
Fig. 4 is a functional block diagram of a conference A presence manager;
Fig. 5 is a schematic diagram of data stored in a presence data storage in the user A presence manager;
Fig. 6 is a schematic diagram of data stored in a presence data storage in the user A presence manager;
Fig. 7 is a diagram showing an example of presence data whose presence ID is "FloorUser";
Fig. 8 is a diagram showing an example of presence data whose presence ID is "JoinUser";
Fig. 9 is a diagram showing an example of presence data whose presence ID is "Member";
Fig. 10 is a diagram showing an example of presence data whose presence ID is "SendingUser";
Fig. 11 is a diagram showing a first portion of a processing flow of the first embodiment of this invention;
Fig. 12 is a diagram showing a second portion of the processing flow of the first embodiment of this invention;
Fig. 13 is a diagram showing a third portion of the processing flow of the first embodiment of this invention;
Fig. 14 is a diagram showing a fourth portion of the processing flow of the first embodiment of this invention;
Fig. 15 is a diagram showing a fifth portion of the processing flow of the first embodiment of this invention;
Fig. 16 is a diagram showing a sixth portion of the processing flow of the first embodiment of this invention;
Fig. 17 is a diagram showing a seventh portion of the processing flow of the first embodiment of this invention;
Fig. 18 is a diagram showing an eighth portion of the processing flow of the first embodiment of this invention;
Fig. 19 is a diagram showing a ninth portion of the processing flow of the first embodiment of this invention;
Fig. 20 is a diagram showing a tenth portion of the processing flow of the first embodiment of this invention;
Fig. 21 is a diagram showing an eleventh portion of the processing flow of the first embodiment of this invention;
Fig. 22 is a diagram showing a twelfth portion of the processing flow of the first embodiment of this invention;
Fig. 23 is a diagram showing a thirteenth portion of the processing flow of the first embodiment of this invention;
Fig. 24 is a diagram showing an example of data stored in the user data storage in the conference A manager in the first embodiment of this invention;
Fig. 25 is a system configuration diagram relating to a second embodiment of this invention;
Fig. 26 is a schematic diagram of data stored in the presence data storage in the conference A presence manager.
Fig. 27 is a diagram showing an example of the presence data whose presence ID is "FetchRequestingUser";
Fig. 28 is a diagram showing a first portion of the processing flow of the content delivery processing in the second embodiment of this invention;
Fig. 29 is a diagram showing a second portion of the processing flow of the content delivery processing in the second embodiment of this invention;
Fig. 30 is a diagram showing a third portion of the processing flow of the content delivery processing in the second embodiment of this invention;
Fig. 31 is a diagram showing a fourth portion of the processing flow of the content delivery processing in the second embodiment of this invention; and
Fig. 32 is a functional block diagram of a computer.

### [Best mode for carrying out the invention]

### 1- First embodiment

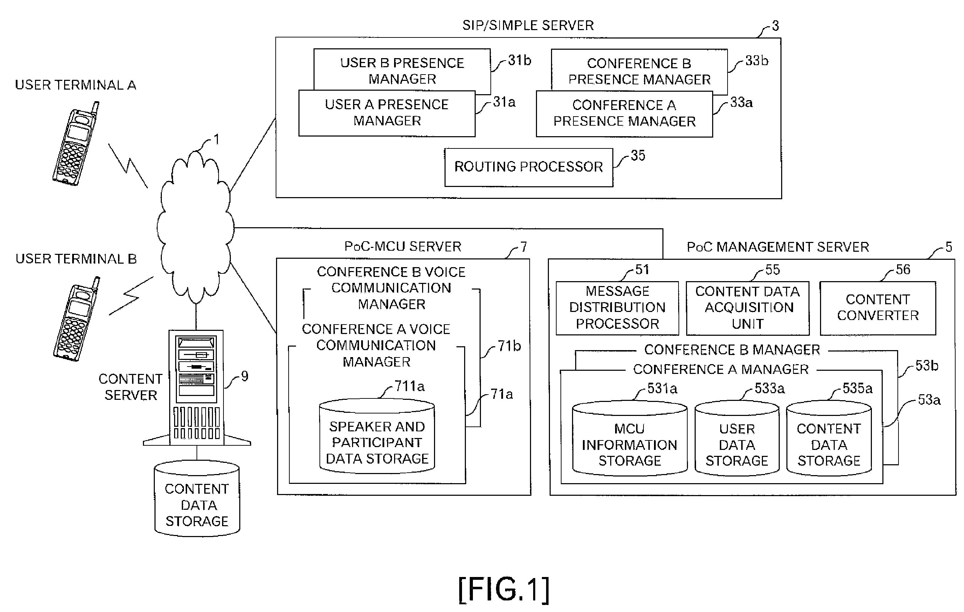

Fig. 1 shows a system outline diagram relating to the first embodiment of this invention. A network 1 such as a cellular phone network is connected with plural cellular phones (here, a user terminal A operated by a user A, and a user terminal B operated by a user B) through wireless base stations not shown in the figure. The cellular phone may be a Personal Handyphone System (PHS) terminal, and not only has a voice call function, but also can execute various application programs such as a mail client, a web browser, a client application in this embodiment and the like. In addition, the user terminals A and B may be portable terminals such as a Personal Digital Assistant (PDA) with the voice call function. The user terminals A and B in this embodiment will be explained by using a functional block diagram later.

The network 1 is connected with a SIP/SIMPLE server 3, a Push-to-talk over Cellular (PoC) -Multipoint Communication Unit (MCU) server 7 and a content server 9 (or called a media server.). The SIP/SIMPLE server 3 and the PoC management server 5 may be one server computer having their functions. Furthermore, there is a case adopting such a configuration that the PoC-MCU server 7 is further integrated into them.

The SIP/SIMPLE server 3 has a presence manager 31a of the user A, a presence manager 31b of the user B, a presence manager 33a of a conference A, a presence manager 33b of a conference B, and a routing processor 35. Here, in order to simplify the explanation, only the presence managers of the users A and B are shown. However, the presence managers are provided only for the number of users. In addition, although only the presence managers of the conferences A and B are shown, the presence managers are provided only for the number of conferences. Moreover, the SIP/SIMPLE server 3 includes processors not directly related to this embodiment such as processors carrying out a user authentication processing. However, they are not shown, here. The presence manager of the user and the presence manager of the conference will be explained by using functional block diagrams later.

The PoC management server 5 is also called a PoC control server, and is a server managing and controlling the teleconference, and includes conference managers 53 carrying out a processing for each conference (here, a conference A manager 53a carrying out a processing for the conference A, and a conference B manager 53b carrying out a processing for the conference B), a message distribution processor 51 carrying out a distribution processing to transfer messages transferred from the routing processor 35 of the SIP/SIMPLE server 3 to a conference manager 53 in charge of the message, a content data acquisition unit 55 obtaining content data, requested from the user, to be delivered to teleconference participants and a content converter 56 carrying out a conversion processing of the content data. In addition, the conference manager 53 includes a MCU information storage 531 (here, a MCU information storage 531a of the conference A), a user data storage 533 (here, a user data storage 533a of the conference A), and a content data storage 535 (here, an content data storage 535a for the conference A) . The content data storage 535a stores content data to be delivered to participants of the conference A. Thus, the PoC management server 5 also manages the data to be delivered to the participants of the conference A.

In addition, the PoC-MCU server 7 includes a conference voice communication manager 71 that manages and controls the voice communication for each conference (here, a conference A voice communication manager 71a carrying out a processing for the conference A and a conference B voice communication manager 71b carrying out a processing for the conference B) , and the conference voice communication manager 71 includes a speaker and participant data storage 711 (here, a speaker and participant data storage 711a of the conference A).

In addition, the content server 9 delivers data stored in the content data storage 91 to registered user or arbitrary users. The content is presumed to be data, which can be browsed by the user terminal, such as still image, moving image and/or text. However, it may be other data. Incidentally, in the first embodiment, even in a case where the content is delivered only to the registered users when the administrative entities of the PoC management server 5 and the content server 9 are the same or they have any cooperation contract, there is no problem that the content server 9 respond to the request when the request is transmitted from the PoC management server 5. However, only the ID of the requesting source user may be confirmed without the authentication.

In Fig. 1, the user terminal communicates with the SIP/SIMPLE server 3 by SIMPLE (SIP (Session Initiation Protocol) for Instant Messaging and Presence Leveraging Extensions)/TCP through the network 1, and communicates with the PoC-MCU server 7 by RTP (Real-time Transport Protocol)/UDP through the network 1.

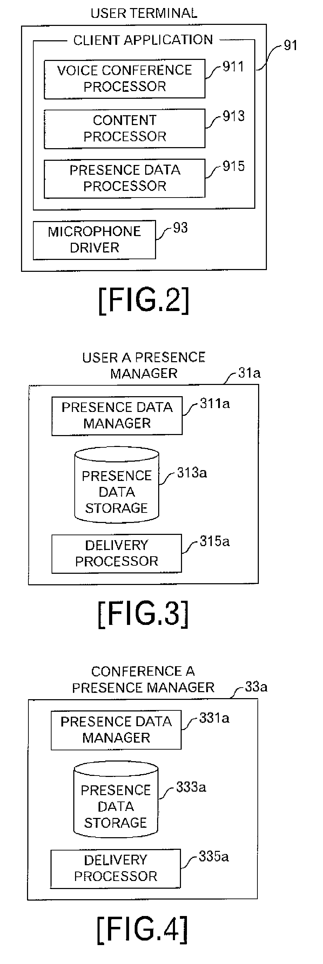

Next, Fig. 2 shows a functional block diagram of the user terminal. The user terminal includes a client application 91 to carry out a processing in this embodiment, and a microphone driver 93 of a microphone provided in the user terminal. The client application 91 includes a voice conference processor 911, a content processor 913, and a presence data processor 915. The content processor 913 accepts a content delivery request from the user, requests the PoC management server 5 or the like to carry out necessary processing, transmits Uniform Resource Indicator (URI) and further receives the content data from the server to display it on the display device. Incidentally, functions not directly related to this embodiment are not shown in this figure.

In addition, Fig. 3 shows a functional block diagram of the presence manager 31a of the user A. The presence manager 31a of the user A includes a presence data manager 311a, a presence data storage 313a, and a delivery processor 315a. The presence manager 31a of the user A cooperates with the client application 91 of the user terminal A to update data stored in the presence data storage 313a, and carries out a delivery processing of the data stored in the presence data storage 313a.

Furthermore, Fig. 4 shows a functional block diagram of the presence manager 33a of the conference A. The presence manager 33a of the conference A includes a presence data manager 331a, a presence data storage 333a, and a delivery processor 335a. The presence manager 33a of the conference A cooperates with the conference A manager 53a of the PoC manager server 5 and the client application 91 of the user terminal to update data stored in the presence data storage 333a, and carries out a delivery processing of the data stored in the presence data storage 333a.

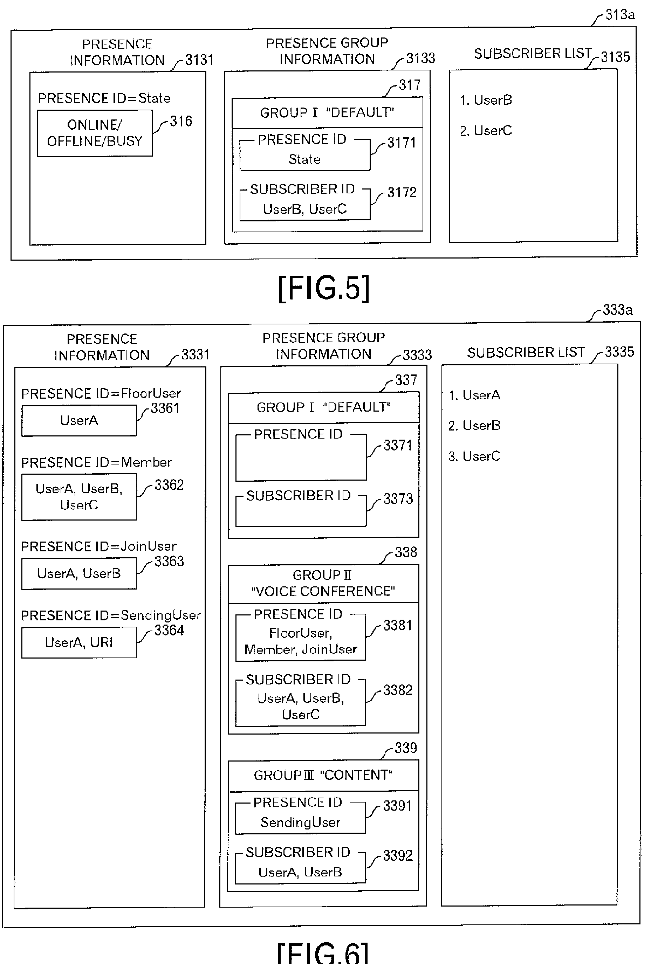

Fig. 5 shows an example of data stored in the presence data storage 313a included in the user A presence manager 31a. In the example of Fig. 5, the presence data storage 313a includes a presence information storage area 3131, a presence group information storage area 3133, and a subscriber list storage area 3135. The presence information storage area 3131 is an area to store, for each presence data item, presence data (here, state information of the user or user terminal), and includes an area 316 to store the presence data (here, mainly ONLINE, OFFLINE, or BUSY. However, other state (e.g. "during data delivering" or "DATA Sending") may be adopted.) whose presence ID, which is an ID of the presence data item, is "state" . The number of presence data items is not limited, but only the presence data item showing the state of the user terminal is indicated in this embodiment. The presence group information storage area 3133 is an area to store data to associate the presence data item (i.e. presence ID) with the delivery destination user ID (i.e. subscriber ID) . Here, it includes an area 317 including an area 3171 to store presence IDs that belong to a group I "default", which is a presence group, and an area 3172 to store user IDs (i.e. subscriber IDs). The default group is a group to which the subscriber is initially registered. The number of groups is not limited, and an arbitrary number of groups can be defined. Here, the user IDs (i.e. subscriber IDs) of the users for whom the information delivery is approved such as the user B and user C are registered in the subscriber list storage area 3135. The number of subscribers is not limited, and an arbitrary number of subscribers can be registered.

In addition, Fig. 6 shows an example of data stored in the presence data storage 333a included in the conference A presence manager 33a. In the example of FIG. 6, the presence data storage 333a includes a presence information storage area 3331, a presence group information storage area 3333, and a subscriber list storage area 3335. The presence information storage area 3331 includes an area 3361 to store the presence data (here, subscriber ID of the user having a speaker right (also called a right to speak)) whose presence ID, which is an ID of the presence data item, is "FloorUser", an area 3362 to store the presence data (here, subscriber ID of the user called to the voice conference) whose presence ID, which an ID of the presence data item, is "Member", an area 3363 to store the presence data (here, subscriber ID of the user participating the voice conference) whose presence ID, which an ID of the presence data item, is "JoinUser" and an area 3364 to store the presence data (here, a subscriber ID having content transmission right and the URI (e.g. http://photo.fj.com/aa/bb/img.jpg) of the content) whose presence ID, which is an ID of the presence data item, is "SendingUser".

In this embodiment, as for the presence data whose presence IDs are "FloorUser", "Member", and "JoinUser", only subscriber IDs are notified, and the states of the user of the subscriber IDs are not notified. As for the state, the individual presence data of the user may be notified. As for the presence data whose presence ID is "SendingUser", only the subscriber ID is notified in this embodiment, and the state of the user of the subscriber ID is not notified. However, the state data such as "during content delivering" may be included into the presence data, and the state data may also be transmitted.

In addition, the presence group information storage area 3333 includes an area 337 including an area 3371 to store presence IDs belonging to a group I "default", which is a presence group, and an area 3373 to store user IDs (i.e. subscriber IDs), an area 338 including an area 3381 to store presence IDs belonging to a group II "voice conference", which is a presence group, and an area 3382 to store user IDs (i.e. subscriber IDs), an area 339 including an area 3391 to store presence IDs belonging to a group III "content", which is a presence group, and an area 3392 to store user IDs (i.e. subscriber IDs).

The subscriber IDs of the users who participate in the voice conference are stored in the are 3382, and data disclosed to the users who participate in the voice conference is the presence data whose presence IDs are "FloorUser", "Member" and "JoinUser". That is, the subscriber ID of a person who has the right to speak, a list of the subscriber IDs of the called users, and a list of the subscriber IDs of the participating users. In addition, the subscriber ID of the user participating in the content delivery is stored in the area 3392, and data disclosed to the users who participate in the content delivery is the presence data whose presence ID is "SendingUser". However, the URI itself included in the presence data whose presence ID is "SendingUser" is not delivered in this embodiment. That is, the subscriber ID of the content transmission right holder is presented.

The user IDs (i.e. subscriber IDs) of the users for whom the information delivery is approved such as the user A, user B and user C are registered in the subscriber list storage area 3335.

In addition, in the user terminal, marks representing respective users, not the subscriber IDs, may be shown, and a mark representing the right to speak may be attached to a user pertinent to "FloorUser", or a different type of mark may be shown. Furthermore, a mark representing the content transmission right or the state in the content delivering may be added to the user pertinent to "SendingUser", or a different type of mark may be shown.

Incidentally, the users who are delivery destinations of the content data may be some or all of the users participating in the voice conference. In the following explanation, a case where the users who are delivery destinations of the content data are conference members of the teleconference or all users who carried out the participation response. That is, the subscriber IDs in addition to the presence data whose presence ID is "Member" or "JoinUser" are registered into the area 3392.

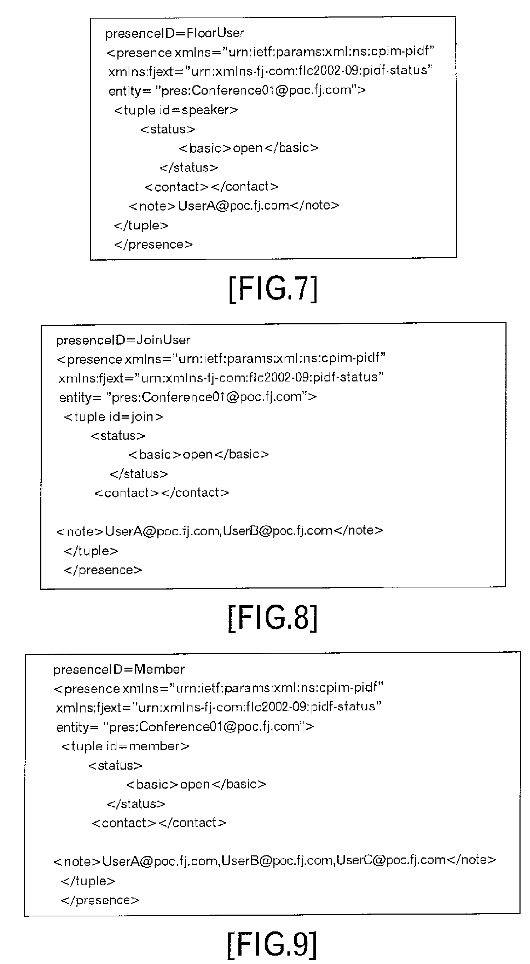

Figs. 5 and 6 schematically show data stored in the presence data storage, and for example, data of the tag data structure as shown in Fig. 7 is stored in the area 3361 for the presence data whose presence ID is "FloorUser", for example. The example of Fig. 7 is described by using XML (extensible Markup Language) basically in conformity with OMA (Open Mobile Alliance). Here, a point to which an attention should be paid is a point that an owner of the presence data whose presence ID is "FloorUser" is identified by STP-URL (Uniform Resource Locator) as Conference01@poc.fj.com in a phrase "entity = "pres: Conference01@poc.fj.com" of the fourth line from the top. Here, the owner of this presence data is the conference A manager 53a of the PoC management server 5, and this presence data is updated by the conference A manager 53a. In addition, the SIP-URL of the conference A manager 53a is "Conference01@poc.fj.com". Furthermore, the SIP-URL "UserA@poc.fj.com" is registered as the user ID of a holder of the right to speak, between tags <note> and </note>. In Figs. 5 and 6, in order to simply indicate "UserA@poc.fj.com", "UserA" is indicated.

Similarly, data having the tag data structure as shown in, for example, Fig. 8 is stored in the area 3363 for the presence data whose presence ID is "JoinUser". In the example of Fig. 8, similarly to Fig. 7, the owner of this presence data is identified by the SIP-URL "Conference01@poc.fj.com", and the SIP-URLs "UserA@poc.fj .com, UserB@poc.fj.com" of the participants of the voice conference are registered as the user IDs, between the tags <note> and </note>.

Furthermore, data of the tag data structure as shown in, for example, Fig. 9 is stored in the area 3362 for the presence data whose presence ID is "Member". In the example of Fig. 9, similarly to Fig. 7, the owner of this presence data is identified by the SIP-URL "Conference01@poc.fj.com", and the SIP-URLs "UserA@poc.fj.con, UserB@poc.fj.com, UserC@poc.fj.com" of the users called into the voice conference are registered as the user IDs, between the tags <note> and </note>.

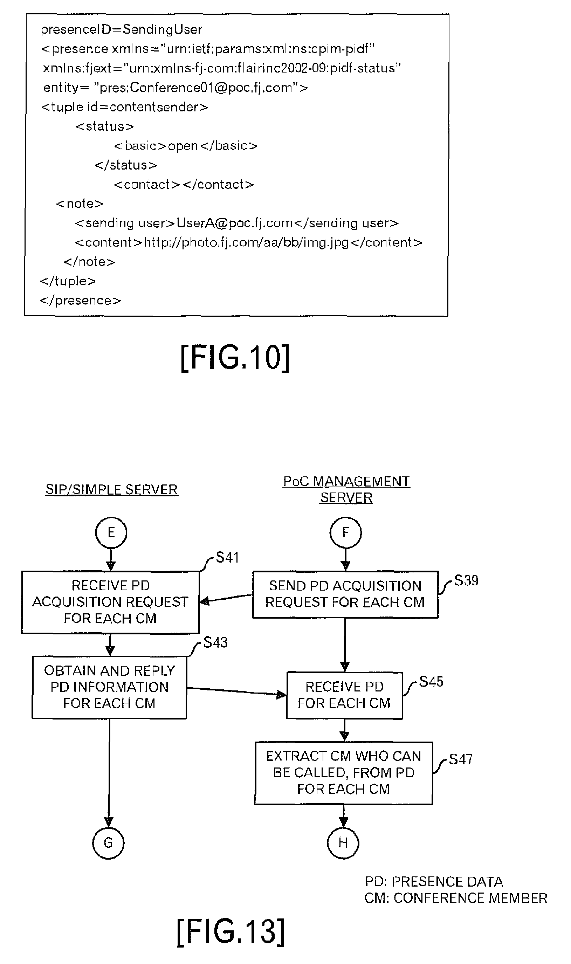

Moreover, data of the tag data structure as shown in, for example, Fig. 10 is stored in the area 3364 for the presence data whose presence ID is "SendingUser". In the example of Fig. 10, the owner of this presence data is identified by the SIP-URL "Conference01@poc.fj.com", and between the tags <note> and </note>, the user ID (here, userA@poc.fj.com) of the user who has the content transmission right is registered between the tags <SendingUser> and </SendingUser>, and the URI (here, http://photo.fj.com/aa/bb/img.jpg) designated by the user having the content transmission right is registered between the tags <content> and </content>.

The presence data is basically updated by the owner, and when updated, the delivery processor delivers the presence data to users of user IDs associated with the presence ID of the presence data. In addition, the conference A manager 53a and the conference B manager 53b of the PoC management server 5 may have a supervisor authority for the presence data in the SIP/SIMPLE server 3 to change the necessary presence data at any time.

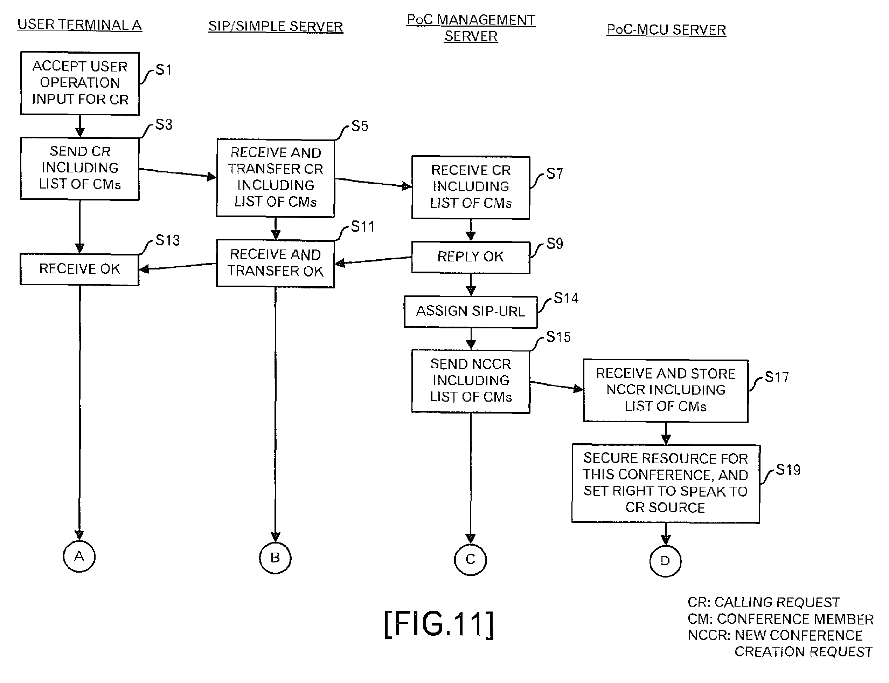

Next, a processing flow of the system shown in Figs. 1 to 4 will be explained by using Figs. 11 to 24. Incidentally, all of the users have logged into the SIP/SIMPLE server 3, and have been authenticated. Furthermore, an IP address of the user terminal has been associated with the user ID (SIP-URL) in the SIP/SIMPLE server 3. First, the user A operates the user terminal A to input a call instruction by designating members to be called into the voice-based teleconference in order to start the conference. The voice conference processor 911 of the client application 91 in the user terminal A accepts the user operation input for the calling instruction of the members to be called into the voice-based teleconference (step S1), and transmits a calling request including a list of conference members (e.g. a list of SIP-URLs) to the SIP/SIMPLE server 3 (step S3). Incidentally, this calling request includes media information (usable data (file) format, information concerning the compression method, size and the like) by the Session Description Protocol (SDP)- The routing processor 35 of the SIP/SIMPLE server 3 receives the calling request including the list of the conference members from the user terminal A, and transfers the request to the PoC management server 5 when it is judged to be the calling request (step S5). The message distribution processor 51 of the PoC management server 5 receives the calling request including the list of the conference members from the routing processor 35 of the SIP/SIMPLE server 3 (step S7). In response to this receipt, the message distribution processor 51 of the PoC management server 5 replies an OK response (step S9). When receiving the OK response from the PoC management server 5, the routing processor 35 of the SIP/SIMPLE server 3 transfers the OK response to the user terminal A (step S11). The user terminal A receives the OK response from the SIP/SIMPLE server 3 (step S13). This enables the user terminal A to recognize the calling request is received by the PoC management server 5.

When receiving the calling request including the list of the conference members, the message distribution processor 51 of the PoC management server 5 newly activates the conference manager 53 (e.g. newly activates the conference A manager 53a) because the new conference is carried out, and assigns the SIP-URL to the conference A manager 53a (step S14). The conference A manager 53a stores the list of the conference members into the user data storage 533a, and transmits a new conference creation request including the list of the conference members to the PoC-MCU server 7 (step S15). In addition, the list of the conference members includes the user ID of the calling request source user and the IP address of that user terminal, and the user is identified as the holder of the right to speak. Incidentally, the conference A manager 53a registers the media information by SDP, which is included in the calling request, into the user data storage 533a in association with the calling requesting source user.

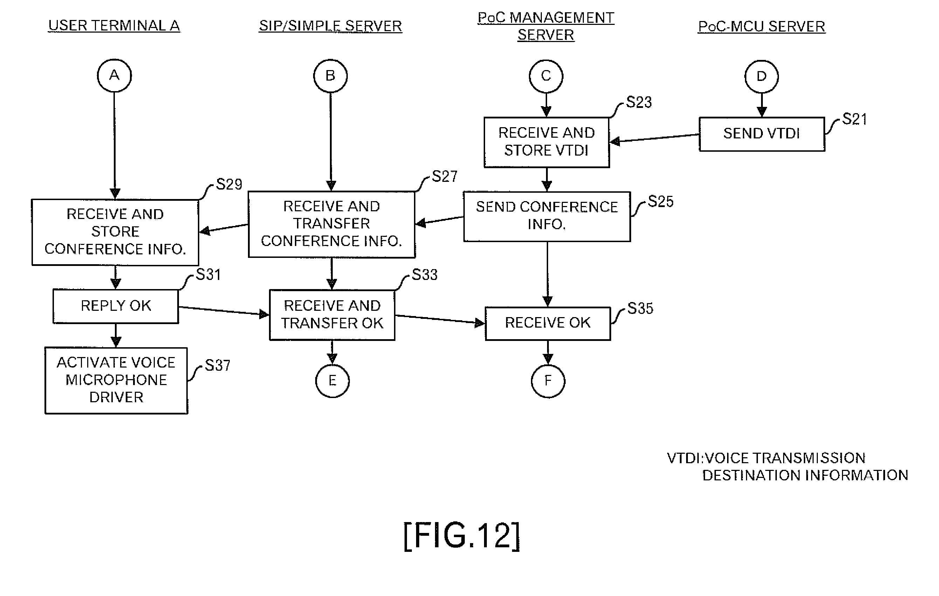

When receiving the new conference creation request including the list of the conference members, the PoC-MCU server 7 newly activates the conference voice communication manager 71 (e.g. the conference A voice communication manager 71a) in order to secure the resources for the new conference. Then, the conference A voice communication manager 71a stores the list of the conference members into the speaker and participant data storage 711a (step S17) . Incidentally, the conference A voice communication manager 71a holds the SIP-URL of the conference A manager 53a, and thereby it becomes possible to respond to an instruction from the conference A manager 53a. Then, the conference A voice communication manager 71a secures the resources used in the conference relating to the calling request, that is, the IP address, the port number and the like, and further sets the right to speak to the calling request source user (step S19) . As for the user having the right to speak, data is held in the speaker and participant data storage 711a in the distinguishable form. In this embodiment, only the person who has the right to speak can cause the PoC-MCU server 7 to transfer the voice data to the other participants. After this, the processing shifts to a processing of Fig. 12 through terminals A to D. Incidentally, the IP address of the user terminal of the calling request source user is registered in the speaker and participant data storage 711a at this stage.

The processing subsequent to the terminals A to D will be explained by using Fig. 12. The conference A voice communication manager 71a of the PoC-MCU server 7 transmits the IP address and the port number that are the resources secured at the step S19, as the voice transmission destination information, to the PoC management server 5 (step S21) - The conference A manager 53a of the PoC management server 5 receives the voice transmission destination information from the PoC-MCU server 7, and stores the information into the MCU information storage 531a (step S23). Then, the conference A manager 53a uses data stored in the MCU information storage 531a to transmit the voice transmission destination information (the IP address and the port number of the PoC-MCU server 7) and the SIP-URL of the conference A manager 53a, as the conference information, to the SIP/SIMPLE server 3 (step S25). When receiving the conference information from the PoC management server 5, the routing processor 35 of the SIP/SIMPLE server 3 transfers the conference information to the user terminal A of the calling request source (step S27) . Incidentally, at this timing, the presence manager (here, the conference A presence manager 33a) of the conference may be activated based on the received conference information.

The voice conference processor 911 of the client application 91 in the user terminal A receives the conference information from the SIP/SIMPLE server 3, and stores the information into a storage device (step S29). The voice conference processor 911 replies an OK response to the SIP/SIMPLE server 3 (step S31). When receiving the OK response from the user terminal A, the routing processor 35 of the SIP/SIMPLE server 3 transfers the OK response to the PoC management server 5 (step S33). The conference A manager 53a of the PoC management server 5 receives the OK response from the SIP/SIMPLE server 3 (step S35). Incidentally, the message distribution processor 51 receives a message (here, the OK response) from the SIP/SIMPLE server 3, and transfers the message to the conference A manager 53a in charge of the message. However, in the following explanation, the explanation for the receipt of the message distribution processor 51 is omitted.

In addition, in response to the receipt of the conference information, the voice conference processor 911 of the client application 91 in the user terminal A activates the microphone driver 93 (step S37). That is, the microphone of the user terminal A detects the voice of the user A, and converts it into electrical signals, and the microphone driver 93 generates voice packets in order to transmit the voice received by the microphone. Thus, the user terminal A can transmit the voice packets to the PoC-MCU server 7 according to the IP address and the port number, which are included in the received conference information. However, even when the voice packets are transmitted to the PoC-MCU server 7 at this stage, other participants are not identified. Therefore, the PoC-MCU server 7 never copies and transfers the voice packets. The processing shifts to a processing of Fig. 13 through terminals E and F.

Next, the processing subsequent to the terminals E and F will be explained by using Fig. 13. The conference A manager 53a of the PoC management server 5 uses the data stored in the user data storage 533a to transmit a presence data acquisition request of each conference member except the calling request source (step S39). The presence data acquisition request is transmitted for each conference member. The presence manager 31 of each conference member in the SIP/SIMPLE server 3 receives the presence data acquisition request of each conference member from the PoC management server 5 (step S41). Normally, only the user can update his or her presence data, and persons who are allowed by the user can subscribe the presence data. Therefore, the PoC management server 5 cannot normally obtain the presence data of the conference members. However, the presence data manager 311 is set in advance so as to enable to refer to the presence data without the subscription approval when the request is received from the PoC management server 5. Or, it is possible to give the supervisor authority to the PoC management server 5 for the presence data in the SIP/SIMPLE server 3, as described above. Therefore, the presence data manager 311 of the presence manager 31, which received the presence data acquisition request, reads out the presence data representing the state of the user or the user terminal of the conference member from the presence data storage 313, and transmits the read data to the PoC management server 5 (step S43).

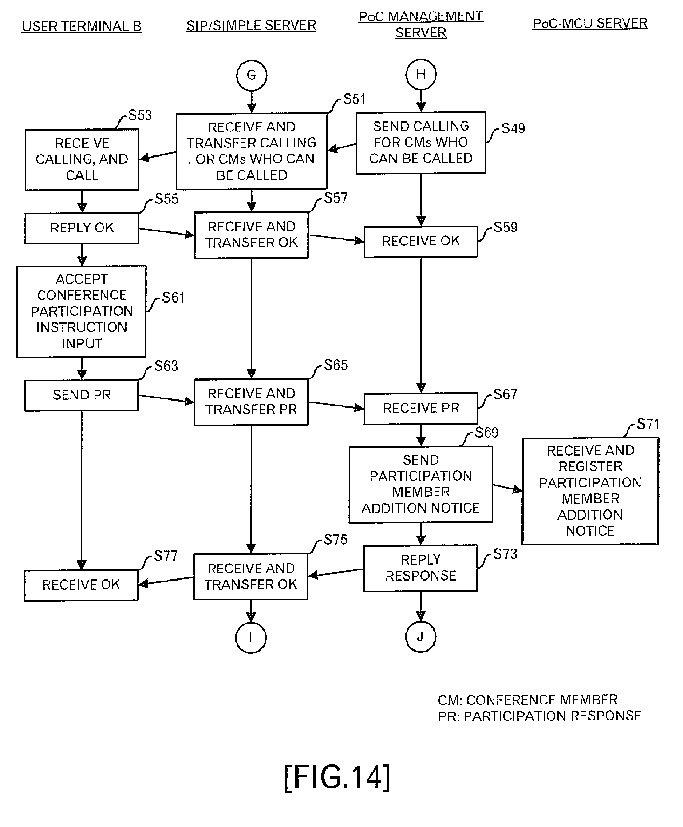

The conference A manager 53a of the PoC management server 5 receives the presence data of each conference member from the SIP/SIMPLE server 3 (step S45), and extracts conference members who can be called from the presence data of each conference member (step S47). That is, the conference members whose presence data indicates a state (e.g. ONLINE) in which the call can be carried out are extracted. When the state is "OFFLINE" or "BUSY", the calling processing described below is not carried out because the calling in the voice conference is impossible. This enables the calling processing to be speedy. However, the processing from the steps S39 to S47 is optional. The processing shifts to a processing of Fig. 14 through terminals G and H. Incidentally, in order to simplify the explanation, it is supposed that the conference member to be called is mere the user B operating the user terminal B.

The processing subsequent to the terminals G and H will be explained by using Fig. 14. The conference A manager 53a of the PoC management server 5 uses the data stored in the user data storage 533a and the MCU information storage 531a to transmit a calling to the conference members who can be called, which includes the conference information (the SIP-URL of the conference A manager 53a, and the IP address and the port number of the PoC-MCU server 7), to the SIP/SIMPLE server 3 (step S49) . Incidentally, this calling includes data of the calling request source user. The routing processor 35 of the SIP/SIMPLE server 3 receives the call to the conference members who can be called, which includes the conference information, from the PoC management server 5, and transfers the calling to the user terminal of each conference member (step S51). Here, the voice conference processor 911 of the user terminal B receives the calling including the conference information from the SIP/SIMPLE server 3, and carries out a processing according to the calling (step S53)- For example, by ringing the phone at arrival or displaying a predetermined display on the display device, the receipt of the calling is notified to the user B. Incidentally, the received conference information is stored in the storage device and used when transmitting the participation response later.

The voice conference processor 911 of the user terminal B transmits the OK response to the calling to the SIP/SIMPLE server 3 (step S55). The routing processor 35 of the SIP/SIMPLE server 3 receives the OK from the user terminal B, and transfers the response to the PoC management server 5 (step S57). The conference A manager 53a of the PoC management server 5 receives the OK response from the STP/SIMPL.E server 3 (step S59). This OK response includes the media information by the SDP, and the conference A manager 53a holds the received media information in association with the user ID of the user B.

In response to the calling at the step S53, the user B judges whether or not he or she participates in the voice conference. When he or she participates in the voice conference, he or she operates the user terminal B to input a conference participation instruction. The voice conference processor 911 of the user terminal B accepts the conference participation instruction by the user B (step S61), and transmits a participation response to the SIP/SIMPLE server 3 (step S63). When receiving the participation response, the routing processor 35 of the SIP/SIMPLE server 3 transfers the participation response to the PoC management server 5 (step S65). The conference A manager 53a of the PoC management server 5 receives the participation response from the user B from the SIP/SIMPLE server 3 (step S67). The conference A manager 53a registers, as the participant, the user ID (i.e-SIP-URL) of the user who carried out the participation response and the IP address of the user terminal into the user data storage 533a. Here, the media information received from the user terminal B at the step S59 is stored into the user data storage 533a in association with the user ID of the user terminal B. In addition, the conference A manager 53a transmits a participating member addition notice including the user ID (i.e. SIP-URL) of the user who carried out the participation response and the IP address of the user terminal to the PoC-MCU server 7 (step S69). The conference A voice communication manager 71a of the PoC-MCU server 7 receives the participating member addition notice including the user ID and IP address of the participant from the PoC management server 5, and registers the user ID and IP address of the participant into the speaker and participant data storage 711a (step S71).

After the step S69, the conference A manager 53a transmits the OK response to the SIP/SIMPLE server 3 (step S73). The routing processor 35 of the SIP/SIMPLE server 3 receives the OK response from the PoC management server 5, and transfers the OK response to the user terminal B (step S75). The user terminal B receives the OK response from the SIP/SIMPLE server 3 (step S77).

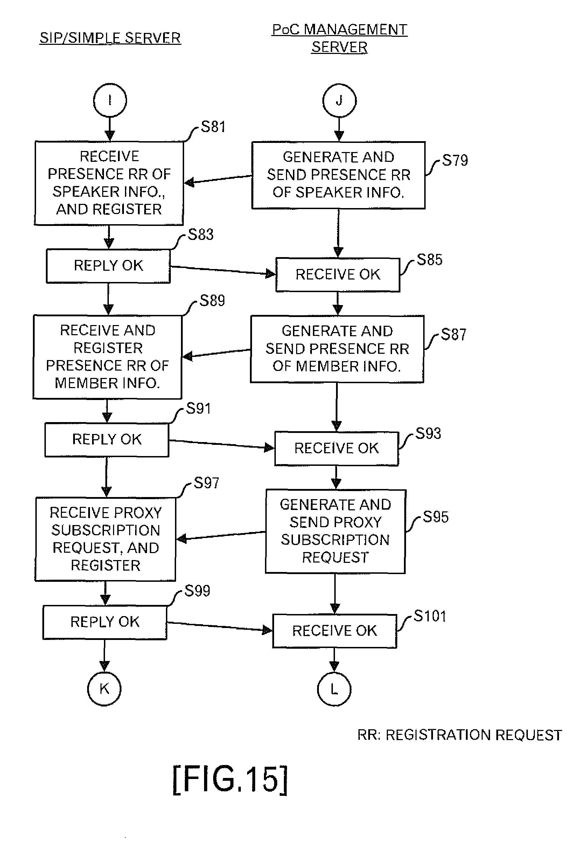

Incidentally, the processing of Fig. 14 is carried out for each conference member who can be called. In addition, the processing shifts to a processing of Fig. 15 through terminals I and J.

The processing subsequent to the terminals I and J will be explained by using Fig. 15. The conference A manager 53a of the PoC management server 5 uses the data stored in the user data storage 533a to generate a presence registration request of the speaker information including the user ID of the user who has the right to speak, and transmits the request to the SIP/SIMPLE server 3 (step S79). More specifically, the conference A manager 53a requests to register the user ID of the user having the right to speak as the presence data whose owner is the conference A manager 53a and whose presence ID is "FloorUser". The SIP/SIMPLE server 3 receives the presence registration request of the speaker information from the PoC management server 5. When the conference A presence manager 33a for the conference A manager 53a is not activated, the conference A presence manager 33a is activated at this timing. Then, the presence data manager 331a of the conference A presence manager 33a stores the user ID of the user having the right to speak as the presence data into the presence data storage 333a in association with the presence ID ("FloorUser") relating to the received presence registration request (step S81 . As shown in Fig. 6, the user ID "user" of the user having the right to speak is registered into the area 3361. In addition, the conference A presence manager 33a transmits the OK response to the PoC management server 5 (step S83) . The conference A manager 53a of the PoC management server 5 receives the OK response from the SIP/SIMPLE server 3 (step S85).

Furthermore, the conference A manager 53a of the PoC management server 5 uses the data stored in the user data storage 533a to generate a presence registration request of the member information including the information of the conference members including the user who carried out the calling request, and transmits the request to the SIP/SIMPLE server 3 (step S87). More specifically, the conference A manager 53a requests to register the user IDs of the conference members including the user who carried out the calling request as the presence data whose presence ID is "Member" and whose owner is the conference A manager 53a. The conference A presence manager 33a of the SIP/SIMPLE server 3 receives the presence registration request of the member information from the PoC management server 5, and the presence data manager 331a of the conference A presence manager 33a stores the presence data (in the example of Fig. 6, "UserA, UserB, UserC") into the presence data storage 333a in association with the presence ID ("Member") relating to the received presence registration request (step S89). In addition, the conference A presence manager 33a transmits the OK response to the PoC management server 5 (step S91). The conference A manager 53a of the PoC management server 5 receives the OK response from the SIP/SIMPLE server 3 (step S93).

In addition, the conference manager 53a of the PoC management server 5 uses the data stored in the user data storage 533a to generate a proxy subscription request for the conference members including the user who carried out the calling request, and transmits the request to the SIP/SIMPLE server 3 (step S95). More specifically, it requests to register the conference members into the subscriber list storage area 3335 in the presence data storage 333a and the area 3382 for the subscriber IDs in the area 338 of the group II "voice conference" in the presence group information storage area 3333. Incidentally, it may request the SIP/SIMPLE server 3 to register the user who carried out the calling request and the users who transmitted the participation response, not the conference members. However, for each participation response, it is necessary to carry out the proxy subscription for the user relating to the participation response. It is also possible to adopt either a method for delivering the presence data such as the participation state, the holder of the right to speak and the like only to the users who transmitted the participation response or a method for delivering the presence data to the called users. This is because it depends on the publication policy of the conference. However, primarily, each user who requires the subscription requests the subscription of the presence data, and after obtaining the permission from the owner of the presence data, each user is registered as the subscriber. Therefore, primarily, each user who participates in the conference or was called must access the SIP/SIMPLE server 3 to request the subscription registration. However, in this embodiment, according to the characteristic of the conference, the PoC management server 5 carries out the proxy subscription registration in a viewpoint in which the subscription of the presence data such as the participation state, the holder of the right to speak and the like is necessary information for the participants (or users who were called) and a viewpoint in which the data communication volume increases in the wireless section when each user is caused to carry out the subscription registration, the communication bandwidth is uselessly wasted, and the progress of the conference becomes slow. Incidentally, the owner of the presence data storage 333a of the conference A presence manager 33a is the conference A manager 53a, and there is no large problem in the proxy subscription registration by the owner.

In addition, in this embodiment, it is requested to the SIP/SIMPLE server 3 that the user who carried out the participation response or the conference member is registered into the area 3392 for the subscriber ID in the are 339 of the group III "Content" in the presence group information storage area 3333 of the presence data storage 333a. Thus, it is possible to carry out the content delivery to the user who carried out the participation response or the conference member in the following processing. Incidentally, the calling into the content delivery may be separately carried out without carrying out such a processing.

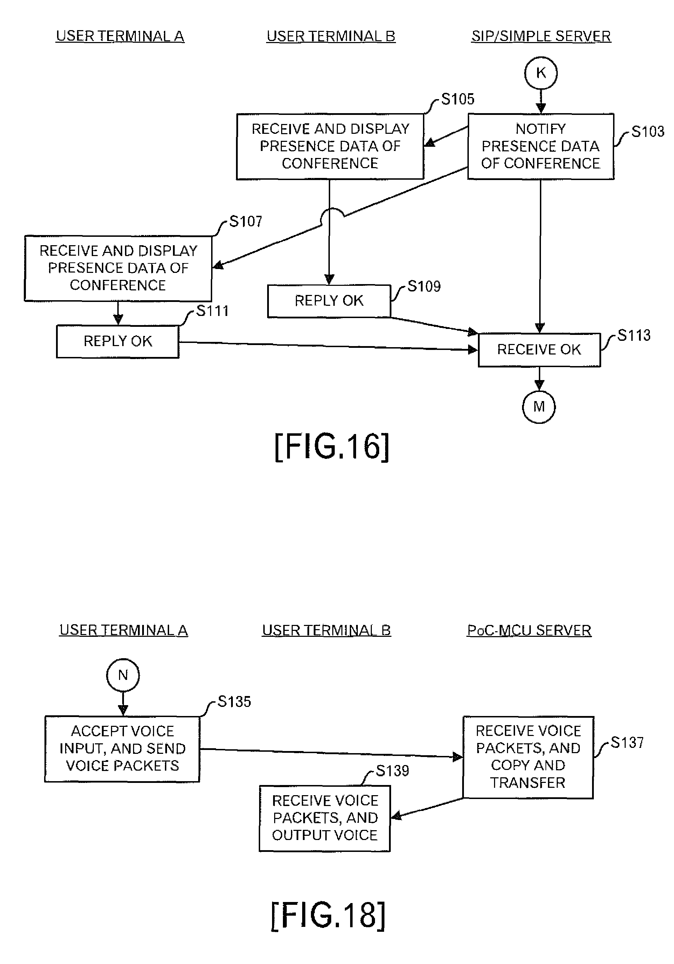

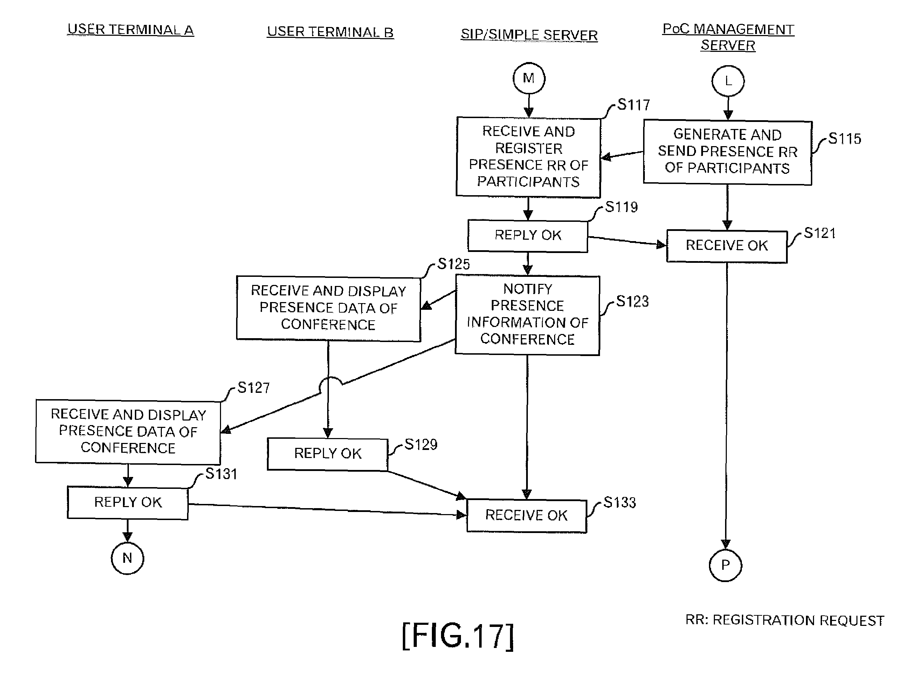

The conference presence manager 33a of the SIP/SIMPLE server 3 receives the proxy subscription request for the conference members including the user who carried out the calling request from the PoC management server 5, registers the conference members (or participants) into the subscriber list storage area 3335 of the presence data storage 333a, and further registers the conference members (or participants) into the area 3382 for the subscriber IDs in the area 338 of the group II "voice conference" in the presence group information storage area 3333 (step S97). As described above, the presence data manager 331a registers the conference member (or participant) into the area 3392 for the subscriber ID in the area 339 of the group III "Content" in the presence group information storage area 3333. In addition, the conference A presence manager 33a transmits the OK response to the PoC server 5 (step S99). The conference A manager 53a of the PoC management server 5 receives the OK response from the SIP/SIMPLE server 3 (step S101). The processing shifts to a processing of Figs. 16 and 17 through the terminals K and L.

Thus, when the conference members (or participants) are registered in the subscriber list storage area 3335 and the area 3382 for the subscriber IDs in the area 338 of the group II "voice conference" in the presence group information storage area 3333, the presence data of the presence IDs registered in the area 3381 for the presence IDs in the area 338 of the group II "voice conference" is delivered to the conference members (or participants) by the delivery processor 335a. Incidentally, the presence data of the presence ID registered in the area 3391 for the presence ID in the area 339 of the group III "Content" in the presence group information storage area 3333 is delivered to the conference members (or participants) by the delivery processor 335a. However, because the presence data itself has not been registered at this stage, the delivery is not carried out.

Next, the processing subsequent to the terminal K will be explained by using Fig. 16. The delivery processor 335a of the conference presence manager 33a in the SIP/SIMPLE server 3 carries out a notification processing of the presence data (the user ID of the holder of the right to speak, the user IDs of the conference members, and the user IDs of the participants) of the conference according to the states in the presence data storage 333a (step S103). Here, the presence data of the conference is transmitted to the user terminals A and B. The presence data processor 915 of the user terminal B receives the presence data of the conference from the SIP/SIMPLE server 3, and displays the data on the display device (step S105) . Similarly, the presence data processor 915 of the user terminal A receives the presence data of the conference from the SIP/SIMPLE server 3, and displays the data on the display device (step S107).

At this stage, because the participants have not been registered in the presence data storage 333a, the display in which only the conference members and the holder of the right to speak can be grasp is carried out. Then, the presence data processor 915 of the user terminal B replies the OK response to the SIP/SIMPLE server 3 (step S109), and the presence data processor 915 of the user terminal A also replies the OK response to the SIP/SIMPLE server 3 (step S111). The conference A presence manager 33a of the SIP/SIMPLE server 3 receives the OK response from the user terminals A and B (step S113). The processing shifts to a processing of Fig. 17 through a terminal M.

Next, the processing subsequent to the terminal L and M will be explained by using Fig. 17. The conference A manager 53a of the PoC management server 5 uses the data stored in the user data storage 533a to generate a presence registration request of the participants (including not only the users who transmitted the participation response but also the user who carried out the calling request), and transmits the request to the SIP/SIMPLE server 3 (step S115). More specifically, the conference A manager 53a requests to register the user IDs of the participants as the presence data whose presence ID is "JoinUser" and whose owner is the conference A manager 53a. The conference A presence manager 33a of the SIP/SIMPLE server 3 receives the presence registration request of the participants from the PoC management server 5, and the presence data manager 331a of the conference A presence manager 33a stores the presence ID ("JoinUser") and the presence data (in the example of Fig. 6, "user, UserB"), which relate to the received presence registration request, into the presence data storage 333a (step S117). Incidentally, on behalf of the processing at the step S97, the presence data manager 331a may register the participating members into the area 3392 for the subscriber ID in the area 339 of the group III "Content" in the presence group information storage area 3333. In addition, the conference A presence manager 33a transmits the OK response to the PoC management server 5 (step S119). The conference A manager 53a of the PoC management server 5 receives the OK response from the SIP/SIMPLE server 3 (step S121).

Then, the delivery processor 335a of the conference A presence manager 33a in the SIP/SIMPLE server 3 carries out a notification processing of the presence data (user ID of the holder of the right to speak, user IDs of the conference members, and the user IDs of the participants) of the conference according to the state of the presence data storage 333a (step S123). Here, the presence data of the conference is transmitted to the user terminals A and B. The presence data processor 915 of the user terminal B receives the presence data of the conference from the SIP/SIMPLE server 3, and displays the data on the display device (step S125). Similarly, the presence data processor 915 of the user terminal A receives the presence data of the conference from the SIP/SIMPLE server 3, and displays the data on the display device (step S127).

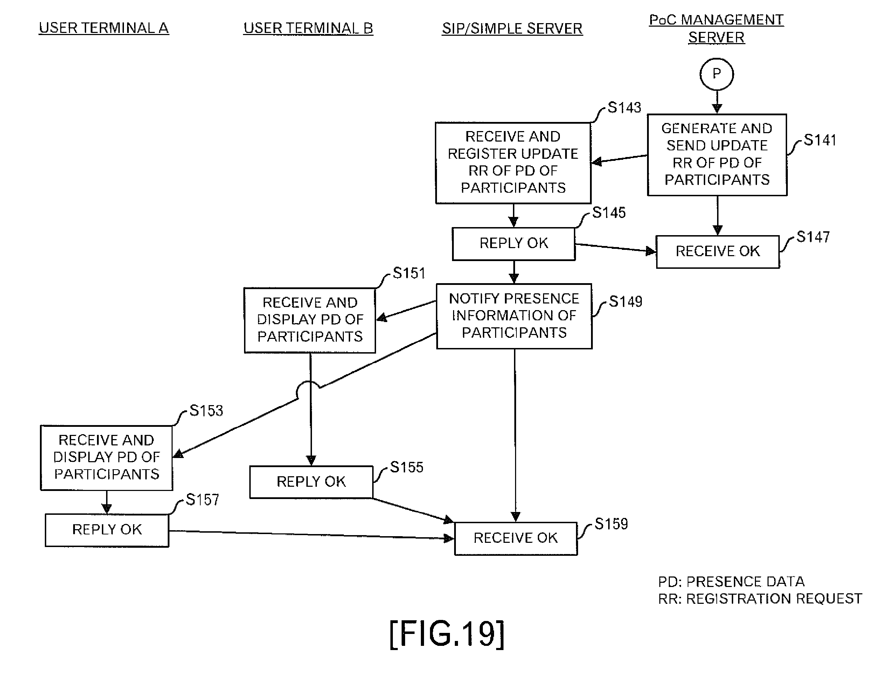

At this stage, because the participants have been registered into the presence data storage 333a at the step S117, a display in which the conference members, the participants, the holder of the right to speak and users who was called but does not participate can be grasp is carried out. Then, the presence data processor 915 of the user terminal B replies the OK response to the SIP/SIMPLE server 3 (step S129), and the presence processor 915 of the user terminal A also replies the OK response to the SIP/SIMPLE server 3 (step S131). The conference presence manager 33a of the SIP/SIMPLE server 3 receives the OK responses from the user terminals A and B (step S133). The processing shifts to a processing of Fig. 18 through a terminal N. The processing also shifts to a processing of Fig. 19 through a terminal P.

When the conference members were registered for the subscription at the step S97, the steps S115 to S133 are executed for each appearance of the new participant. When the participants were registered for the subscription at the step S97, the steps S115 to S133 are executed for each appearance of the new participant, the presence data is delivered to the users who have been registered for the subscription as the participants, and, furthermore, the steps S95 to S113 are executed and the presence data is delivered to the new participant.

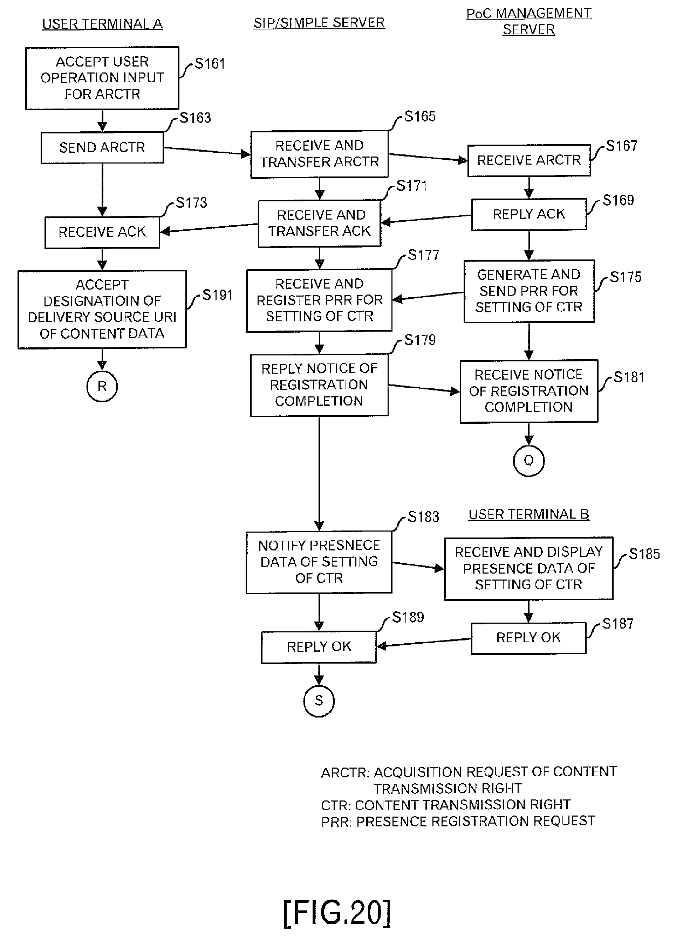

When the processing shown in Fig. 20 has been completed, each participant of the teleconference can recognize other participants, and can start the conference. Incidentally, because the user who carried out the calling request holds the right to speak, only this user can speak.

That is, the processing shown in Fig. 18 is carried out. Because the user A has the right to speak, the user A speaks to the user terminal A. The user terminal A accepts the voice input from the user A by the microphone, and the voice conference processor 911 generates the voice packets from the voice data generated by the microphone driver 93, and transmits the packets to the PoC-MCU server 7 (step S135) . At this time, the IP address and the port number of the PoC-MCU server 7, which were received as the conference information, is used. That is, the voice packets are directly transmitted to the PoC-MCU server 7.

The conference A voice communication manager 71a of the PoC-MCU server 7 receives the voice packets from the user terminal A, and transfers the copy of the voice packets to the IP addresses of the participants, which are stored in the speaker and participant data storage 711a (step S137). The voice conference processor 911 of the client application 91 in the user terminal B receives the voice packets from the PoC-MCU server 7, and outputs the voice relating to the voice packets through a speaker driver and a speaker not shown. Thus, the voice-based teleconference is carried out. Incidentally, the movement of the right to speak is not the main portion of this embodiment. Therefore, the explanation is omitted, here.

Next, the processing subsequent to the terminal P will be explained by using Fig. 19. The conference A manager 53a of the PoC management server 5 uses the data stored in the user data storage 533a to generate an update registration request of the presence data so as to change, for each participant (including the user who carried out the calling request), the presence data of the participants to "BUSTY" (or in the voice conference or the like) , and transmits the request to the SIP/SIMPLE server 3 (step S141). More specifically, when assuming that the participants are the users A and B, the conference A manager 53a generates the presence data update registration request to change the data stored in the area 316 (whose presence ID is "statue") of the presence information storage area 3131 in the presence data storage 313a of the user A presence manager 31a to "BUSY" or the like, and the presence data update registration request to change the data stored in the area 316 of the presence information storage area 3131 in the presence data storage 313b of the user B presence manager 31b to "BUSY" or the like, and transmits the requests to the SIP/SIMPLE server 3.

Primarily, the data of the presence data storage 313a in the user A presence manager 31a can be changed only by the user A. Similarly, the data of the presence data storage 313b in the user B presence manager 31b can be changed only by the user B. However, in this embodiment, in order to smoothly progress the voice conference and reduce the communication volume in the wireless section, the change is permitted to the PoC management server 5, specially. As described above, it is effective that the supervisor authority for the presence data in the SIP/SIMPLE server 3 is granted to the PoC management server 5.

The user A presence manager 31a (and the user B presence manager 31b. However, in the following, because of the duplication, the explanation is omitted.) of the SIP/SIMPLE server 3 receives the update registration request of the presence data of the participant from the PoC management server 5, and the presence data manager 311 of the user A presence manager 31a stores the presence data such as "BUSY" or the like in association with the presence ID "State" (step S143). The user A presence manager 31a of the SIP/SIMPLE server 3 transmits the OK response to the PoC management server 5 (step S145). The conference A manager 53a of the PoC management server 5 receives the OK response from the SIP/SIMPLE server 3 (step S147) .

Thus, when the update of the presence data of the users A and B is carried out, the presence data of the user A or B is notified to the users who are registered as the subscribers of the presence ID "State". That is, the delivery processor 315 of the user A presence manager 31a in the SIP/SIMPLE server 3 carries out a notification processing of the presence data of the user A according to the state of the presence data storage 313a (step S149). In the example of Fig. 5, the presence data is transmitted to the users B and C. Incidentally, the similar processing for the user B presence manager 31b is carried out. However, the presence data of the user B is transmitted to the users A and C.

Then, the presence processor 915 of the terminal B receives the presence data of the user A from the SIP/SIMPLE server 3, and displays the data on the display device (step S151). Similarly, the presence data processor 915 of the user terminal A receives the presence data of the user B from the SIP/SIMPLE server 3, and displays the data on the display device (step S153). In the other user terminals, the display is changed, similarly. This enables other users who subscribe the state of the participants of the voice-based teleconference to recognize the participants cannot be reached because of BUSY.

Then, the presence data processor 915 of the user terminal B replies the OK response to the SIP/SIMPLE server 3 (step S155), and the presence data processor 915 of the user terminal A also replies the OK response to the SIP/SIMPLE server 3 (step S157). The user A presence manager 31a and the user B presence manager 31b of the SIP/SIMPLE server 3 receives the OK response to the user terminals A and B (step S159).

By carrying out such a processing, the pre-processing for the content delivery is completed.

Next, a processing when a content delivery processing is carried out according to the first embodiment will be explained by using Figs. 20 to 23. First, the user of the user terminal A operates the user terminal A to instruct the user terminal A to acquire the content transmission right. The presence data processor 915 in the client application 91 of the user terminal A accepts the acquisition instruction of the content transmission right from the user (step 5161), and transmits the acquisition request of the content transmission right to the SIP/SIMPLE server 3 (step S163). When the routing processor 35 of the SIP/SIMPLE server 3 receives the acquisition request of the content transmission right from the user terminal A and judges that it is the acquisition request of the content transmission right, the routing processor 35 transfers the acquisition request to the PoC management server 5 (step S165). When receiving the acquisition request of the content transmission right from the SIP/SIMPLE server 3 (step S167), the PoC management server 5 replies the ACK to the SIP/SIMPLE server 3 (step S169) . When receiving the ACK, the routing processor 35 of the SIP/SIMPLE server 3 transfers the ACEC to the user terminal A (step S171). The presence data processor 915 in the client application 91 of the user terminal A receives the ACK from the SIP/SIMPLE server 3 (step S173) .

In addition, after the conference A manager 53a of the PoC management server 5 confirms a setting state of the content transmission right, which is stored in the user data storage 533a, when there is no user who has the content transmission right, the conference A manager 53a generates a presence registration request for the setting of the content transmission right, which has the user ID of the transmission source of the acquisition request of the content transmission right, and transmits the presence registration request to the SIP/SIMPLE server 3 (step S175). The conference A manager 33a of the SIP/SIMPLE server 3 receives the presence registration request for the setting of the content transmission right, which has the user ID of the transmission source of the acquisition request of the content transmission right from the PoC management server 5, and registers the user ID into the presence data storage 333a (step S177). Specifically, in the presence data storage 333a, the user ID "UserA" of the transmission source of the acquisition request of the content transmission request is registered to the presence data (Fig. 10) whose presence ID is "SendingUser".

Then, the conference A presence manager 33a replies a notice of the registration completion to the PoC management server 5 (step S179). The conference A manager 53a of the PoC management server 5 receives the notice of the registration completion from the SIP/SIMPLE server 3 (step S181).

In addition, the delivery processor 335a in the conference A manager 33a of the SIP/SIMPLE server 3 carries out a notification processing of the presence data (the user ID of the user having the content transmission right) representing has bee set the content transmission right for the user A according to the state of the presence data storage 333a (step S183) . Here, the presence data whose presence ID is "SendingUser" and which is stored in the presence data storage 333a, is transmitted to the user terminal B. The presence data processor 915 of the user terminal B receives the presence data representing has been set the content transmission right from the SIP/SIMPLE server 3, and displays the data on the display device (step S185).

The presence data processor 915 of the user terminal B replies the OK response to the SIP/SIMPL,E server 3 (step S187). The conference A presence manager 33a of the SIP/SIMPLE server 3 receives the OK response from the user terminal B (step S189). Incidentally, the notice may be sent to the user terminal A.

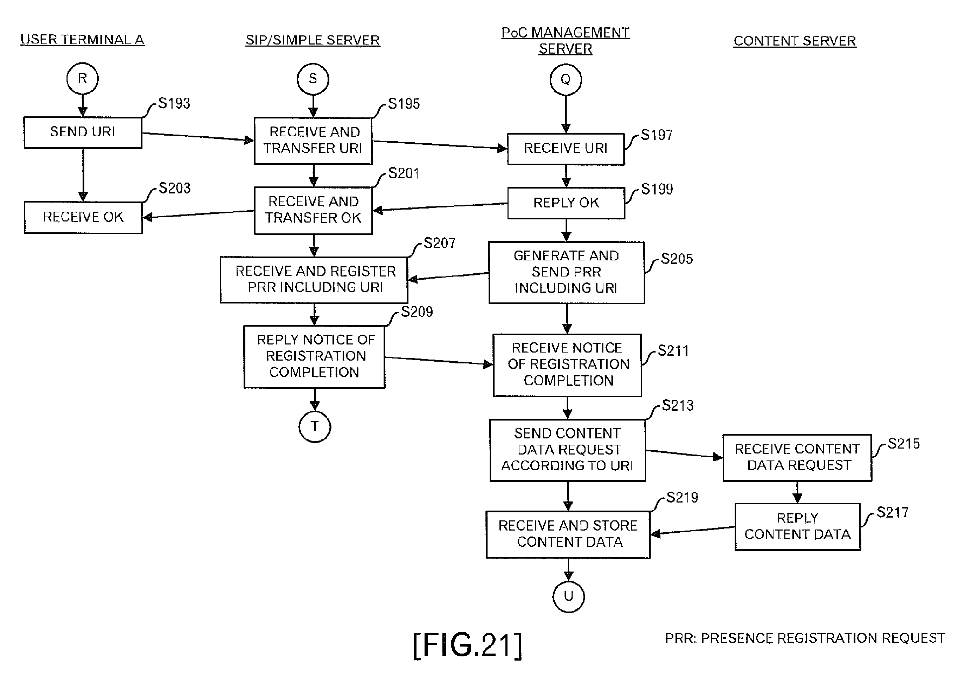

On the other hand, the user of the user terminal A designates a delivery source URI of the content data. In response to this, the content processor 913 in the client application 91 of the user terminal A accepts the designation input of the delivery source URI of the content data from the user (step S191). The processing shifts to a processing of Fig. 21 through terminals Q, R and S.

Shifting to the explanation of the processing in Fig. 21, the content processor 913 of the user terminal A transmits the input URI to the SIP/SIMPLE server 3 (step S193). The routing processor 35 of the SIP/SIMPLE server 3 receives the URI from the user terminal A, and transfers the URI to the PoC management server 5 (step S195). When receiving the URI from the SIP/SIMPLE server 3 (step S197), the conference A manager 53a of the PoC management server 5 replies the OK response to the PoC management server (step S199). The SIP/SIMPLE server 3 receives the OK response, and transfers the OK response to the user terminal A (step S201). The content processor 913 in the client application 91 of the user terminal A receives the OK response from the SIP/SIMPLE server 3 (step S203).

In addition, the conference A manager 53a of the PoC management server 5 confirms the setting state of the content transmission right, which is stored in the user data storage 533a, and when it is confirmed that the transmission source of the URI has the content transmission right, the conference A manager 53a generates a presence registration request including the URI received at the step S197, and transmits the presence registration request to the SIP/SIMPLE server 3 (step S205). When the URI is designated by the user who does not have the content transmission right, the URI is discarded. The conference A presence manager 33a of the SIP/SIMPLE server 3 receives the presence registration request including the URI from the PoC management server 5, and registers the URI into the presence data storage 333a (step S207). Specifically, in the presence data storage 333a, the URI is stored to the presence data (Fig. 10) whose presence ID is "SendingUser". The conference A presence manager 33a replies the notice of the registration completion to the PoC management server 5 (step S209). The conference A manager 53a of the PoC management server 5 receives the notice of the registration completion (step S211). The URI is not notified as the presence data.

Then, the conference A manager 53a outputs the URI to the content data acquisition unit 55 to request the content data acquisition unit 55 to acquire the content. In response to this, the content data acquisition unit 55 transmits a content data request according to the URI designated by the user having the content transmission right (step S213). For example, the user ID of the user having the content transmission right may be included in the content data request. The content server 9 corresponding to the URI receives the content data request from the PoC management server 5 (step S215), reads out the content data relating to the request from the content data storage 91, and transmits the read content data to the PoC management server 5 of the requesting source (step S217) . When the user ID of the user having the content transmission right is included in the content data request, the user ID may be confirmed. The content data acquisition unit 55 of the PoC management server 5 receives the content data from the content server 9, and stores the content data into the content data storage 535a in the conference A manager 53a of the requesting source (step S219).

Thus, when the content to be delivered to the conference members or the participants, to which the URI is designated, is obtained from the content server 9 by the content data acquisition unit 55, it is possible to deliver the content also to the user who does not have the access right to the URI, for example. As described above, when the PoC management server 5 and the content server 9 are managed by the same administrative entity, there is no problem when the authentication or the like is not carried out for the request from the PoC management server 5. Incidentally, when only the use right is confirmed, the user ID of the user having aforementioned content transmission right is confirmed.

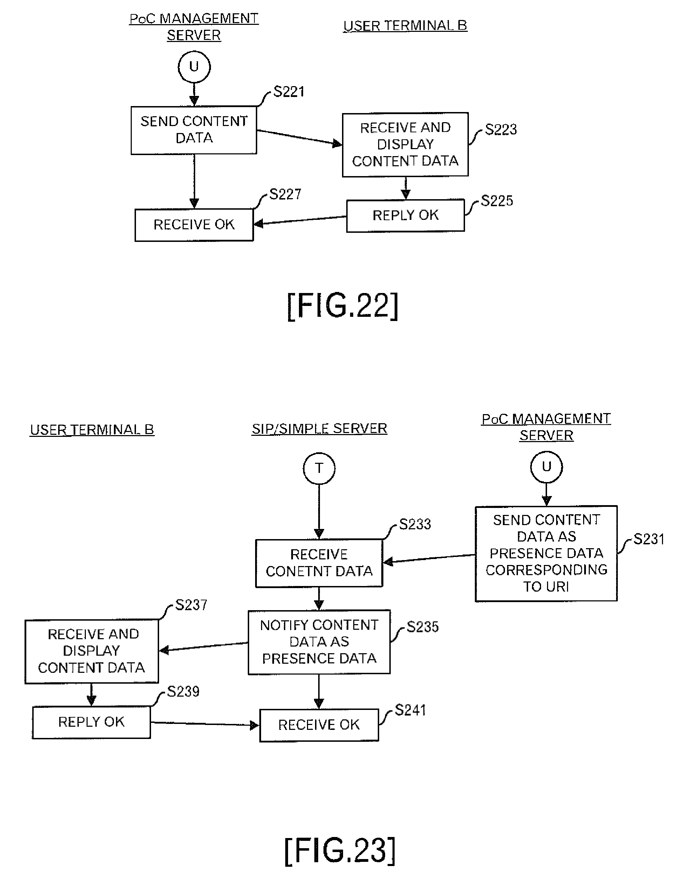

In the following, the processing shifts to the processing of Fig. 22 in case of the first example through a terminal U, and the processing shifts to the processing of Fig. 23 through the terminals U and T in case of the second example.

First, the first example will be explained. When the content data is stored in the content data storage 535a, the conference A manager 53a reads out IP addresses of the participants (here, participating users who do not have the content transmission right. Here, specifically, the user B) of the conference A, which is stored in the user data storage 533a, and the like, and transmits the content data stored in the content data storage 535a to the user terminal B (Fig. 22: step S221). The content processor 913 of the user terminal B receives the content data from the PoC management server 5, and displays the content data on the display device (step S223) . The content processor 913 in the client application 91 of the user terminal B replies the OK response to the PoC management server 5 (step S225). The conference A manager 53a of the PoC management server 5 receives the OK response from the user terminal B (step S227).

When such a processing is carried out, it is possible to share the content data itself, not the URI, with the conference members or the participants, and the conference smoothly proceeds.

Next, the second example will be explained. The conference A manager 53a of the PoC management server 5 transmits the content data stored in the content data storage 535a as the presence data corresponding to the designated URI, to the SIP/SIMPLE server (step S231). When receiving the content data corresponding to the URI from the PoC management server 5 (step S233), the conference A presence manager 33a of the SIP/SIMPLE server 3 presumes the update of the presence data, and carries out a processing to notify the content data as the presence data (step S235). Here, it is assumed that the content data is not transmitted to the user terminal A of the user A having the content transmission right, and is transmitted to other participating users (here, the user B) . The presence data processor 915 in the client application 91 of the user terminal B receives the content data from the SIP/SIMPLE server 3, and outputs the content data to the content processor 913. The content processor 913 displays the received content data on the display device (step S237). In addition, the presence data processor 913 in the client application 91 of the user terminal B replies the OK response to PoC management server 5 (step S239). Moreover, the conference A presence manager 33a of the SIP/SIMPLE server 3 receives the OK response (step S241).

By carrying out such a processing, the content data is automatically delivered to the conference members or the participants, and the work of the user is reduced rather than delivering the URI.

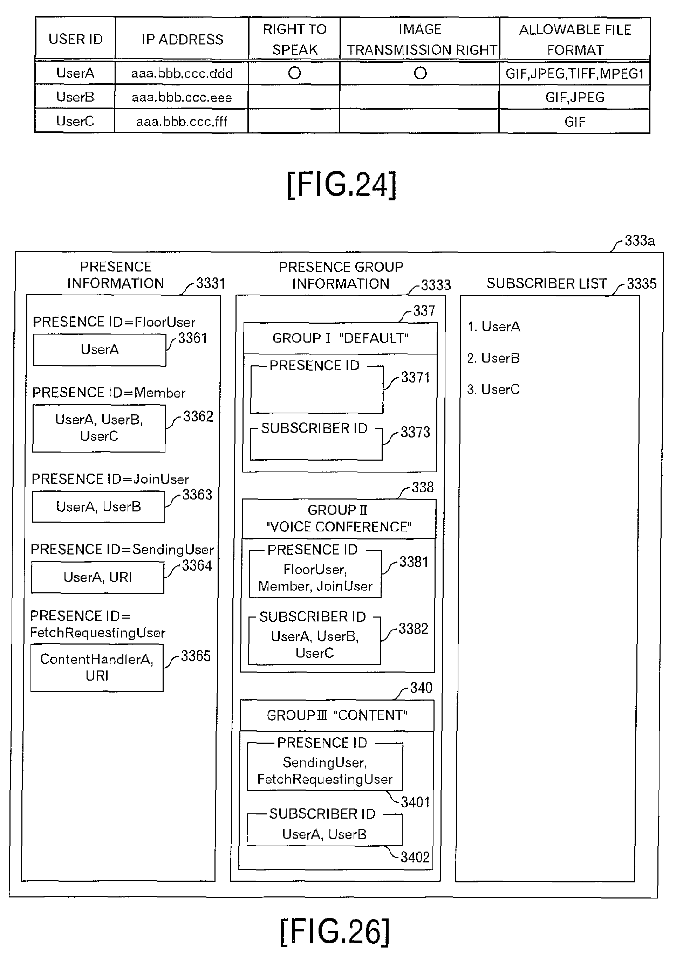

Incidentally, in the aforementioned example, it is not confirmed whether or not the content data designated by the URI is usable in the user terminals of the conference members or the participating user other than the user terminal A. As described above, the PoC management server 5 side obtains the media information of the user terminal for each participating user and holds the data as shown in Fig. 24 into the user data storage 533a, for example. Specifically, for each user ID of the user participating in the conference, the IP address, the presence of the right to speak, the presence of the content transmission right, and allowable file formats (file formats such as GIF, JPEG, TIFF, MPEG and the like) are stored. There is a case where data concerning the allowable file size or the like is held. By using such data, the conference A manager 53a judges whether or not the data stored in the content data storage 533a can be used by the user terminals of the participating users. For example, when the format of the received content is TIFF and the data as shown in Fig. 24 is held, it may be judged that the user terminal A (UserA) can use it but the user terminals B and C cannot use it. In this case, the content data is not transmitted to user terminals judged not to be able to use it. Specifically, like the aforementioned first example, the PoC management server 5 transmits the content data, but the content data is not transmitted to the user terminals, which is judged not to be able to use it. Thus, it is possible not to carry out unnecessary communication. The communication bandwidth in the wireless section is not uselessly consumed.

Furthermore, (1) when the format of the content data is not the format (e.g. GIF in the example of Fig. 24) usable in all of the user terminals, by using the content converter 56 shown in Fig. 1, the format is converted to the format usable in all of the user terminals, and the converted content is delivered according to the aforementioned first and second examples. Or, (1) it is judged for each user terminal, whether or not the received content can be used, and when the content data cannot be used, the format is converted to the usable format and the converted content data is transmitted according to the first example.

Thus, because it is possible to deliver the content data according to the user terminal sides, it is possible to proceed with the conference, smoothly.

Incidentally, although it is not described above, the repeal or transfer of the content transmission right can be processed similarly to the normal right to speak. However, in response to the repeal or transfer of the content transmission right, the URI has to be updated to the newly designated URI.

### 2. Second Embodiment

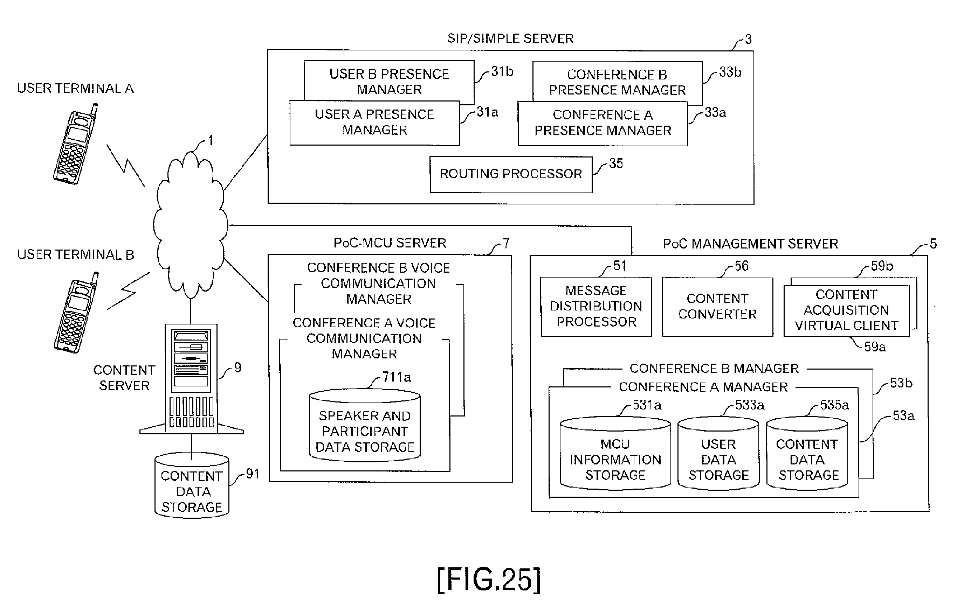

Primarily, although it is required that the load of the server is lightened as much as possible, the processing load may be increased in the first embodiment, because the PoC management server 5 includes the content acquisition unit 55 and content conversion unit 56. Therefore, for example, the system configuration like Fig. 25 is adopted.

The different between Figs. 1 and 25 is the configuration of the PoC management server 5. Instead of the content acquisition unit 55, one or plural content acquisition virtual clients (in Fig. 25, the content acquisition virtual clients 59a and 59b) are provided. This content acquisition virtual client 95 representatively obtains the content from the content server 9, and is a program functioning as a special virtual client different from the user terminal. In Fig. 25, although the virtual client is activated and operated in another thread different from the conference manager 53 or the like, another server for the content acquisition virtual client 59 may be prepared. By adopting such a configuration, the load of the PoC management server 5 can be lowered.

The content acquisition virtual client 59 may be prepared for each content server 9 if plural content servers 9 exist. In addition, the user having the content transmission right may identify the content acquisition virtual client 59 to be used. Furthermore, for example, the content processor 913 in the client application 91 of the user terminal may automatically set the content acquisition virtual client according to the URI without the user's intention, or for example, options (the content acquisition virtual client 59 for the content server 9, which requires the user ID and password or the content acquisition virtual client 59, which does not require the authentication), which can be understood even by the users may be presented to indirectly make the user designate.

In addition, in case of the system configuration as shown in Fig. 25, the data as shown in Fig. 26 is stored in the presence data storage 333a of the conference A presence manager 33a. The difference with Fig. 6 is a portion in which an area 3365 to store the presence data whose presence ID is "FetchRequestingUser" is added in the presence information storage area 3331. In this area 3365, ContentHandlerA, which is an ID of the content acquisition virtual client 59, and the URI designated by the user having the content transmission right are stored.

In addition, "FetchRequestingUser" is added to the area 340 of the group III "Content" in the presence group information area 3333 as the presence ID in addition to "SendingUser". However, the presence data whose presence ID is "FetchRequestingUser" may not be delivered.

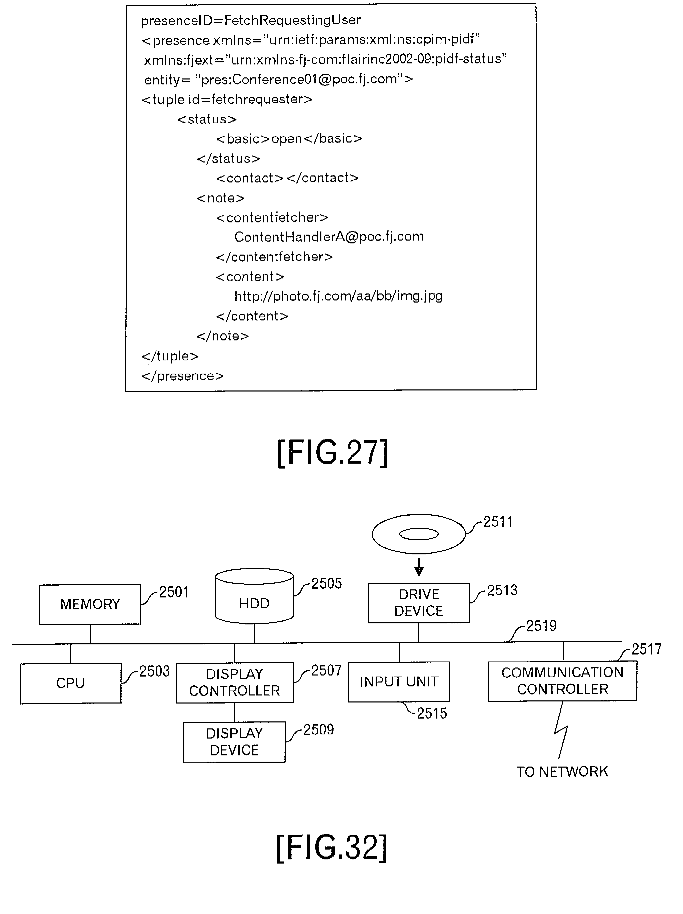

The presence data stored in the aforementioned area 3365 includes data having the tag data structure as shown, for example, in Fig. 27. In the example of Fig. 27, the owner of this presence data is identified by the SIP-URL "Conference01@poc.fj.com", and between the tags <note> and </note>, an ID (here, ConetntHandlerA@poc.fj.com) of the content acquisition virtual client 59 is registered between tags <contentfetcher> and </contentfetcher>, and the URI (here, http://photo.fj.com/aa/bb/img.jpg) designated by the user having the content transmission right is registered between tags <content> and </content>.

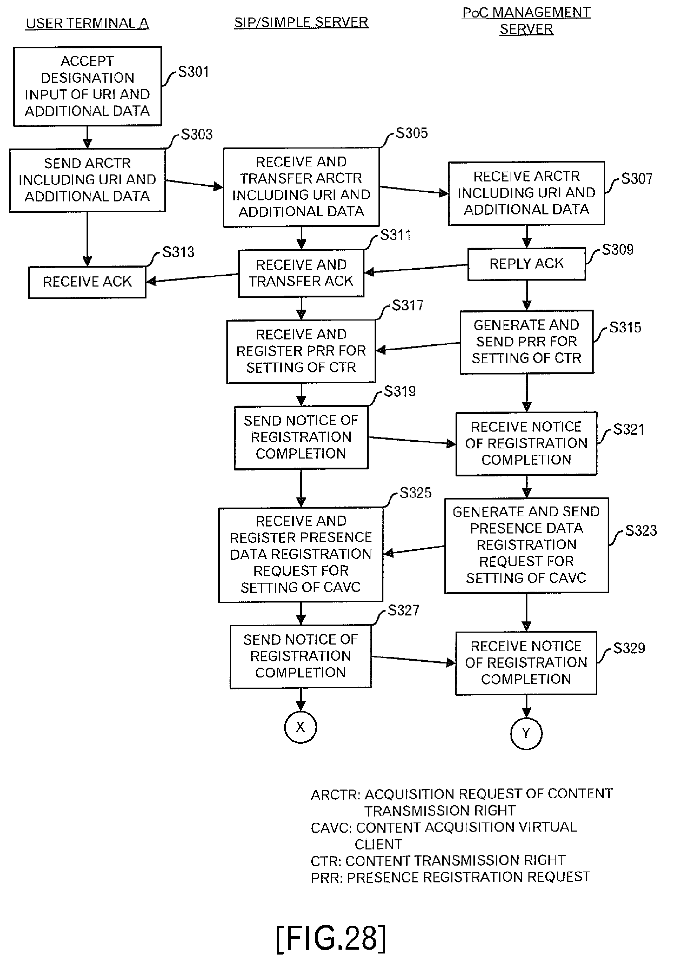

Next, a processing flow in this embodiment will be explained by using Figs. 28 to 31. First, the user operates the user terminal A to input an acquisition request of the content transmission right, designate the URI, which is the delivery source of the content, and input additional data including necessary ID and password, the ID of the content acquisition virtual client 59 and the like. Incidentally, the input of the ID and password is required when the content server 9 requests them, and when the content server 9 does not request them, it is unnecessary to input the ID and password. In addition, as described above, the user may positively input the ID of the content acquisition virtual client 59, and the ID of the content acquisition virtual client 59 may be automatically identified by the designation of the URI or the like. The content processor 913 of the user terminal A accepts, from the user, the input of the acquisition request of the content transmission right, and the input of the additional data including the necessary ID and password, the ID of the content acquisition virtual client 59 and the like (step S301), generates an acquisition request of the content transmission right, which includes the URI and the additional data, and transmits the acquisition request to the SIP/SIMPLE server (step S303).

When the routing processor 35 of the SIP/SIMPLE server 3 receives the acquisition request of the content transmission right, which includes the URI and the additional data, and recognizes that the request is the acquisition request of the content transmission right, the routing processor 35 transfers the request to the PoC management server 5 (step S305). When receiving the acquisition request of the content transmission right, which includes the URI and the additional data (step S307), the conference A manager 53a of the PoC management server 5 replies the ACK response (step S309) . When receiving the ACK response from the PoC management server 5, the SIP/SIMPLE server 3 transfers the ACK response to the user terminal A (step S311) . The user terminal A receives the ACK response from the SIP/SIMPLE server 3 (step S313).

In addition, the conference A manager 53a of the PoC management server 5 refers to the user data storage 533a to confirm the setting state of the content transmission right, and when there is no user who obtains the content transmission right, the conference A manager 53a generates a presence registration request, including the user ID (here, the user ID of the user A) of the acquisition request source of the content transmission right, for the setting of the content transmission right for the acquisition request source of the content transmission right, and transmits the presence registration request to the SIP/SIMPLE server 3 (step S315). When receiving the presence registration request, including the user ID of the acquisition request source of the content transmission right, for the setting of the content transmission right for the acquisition request source of the content transmission right, the conference A presence manager 33a of the SIP/SIMPLE server 3 registers the user ID into the presence data storage 333a (step S317). Specifically, in the presence data storage 333a, the user ID "UserA" of the transmission source of the acquisition request of the content transmission right is registered to the presence data (Fig. 10) whose presence ID is "SendingUser".

Then, the conference A presence manager 33a replies a notice of the registration completion to the PoC management server 5 (step S319). The conference A manager 53a of the PoC management server 5 receives the notice of the registration completion from the SIP/SIMPLE server 3 (step S321).

In addition, the conference A manager 53a of the PoC management server 5 generates a presence registration request, including the ID (Here,. "ContentHnadlerA@poc.fj.com") of the content acquisition virtual client 59, which is included in the additional data of the acquisition request of the content transmission right, for the setting of the content acquisition virtual client, and transmits the presence registration request to the SIP/SIMPLE server 3 (step S323). When receiving, from the PoC management server 5, the presence registration request, including the ID of the content acquisition virtual client 59, for the setting of the content acquisition virtual client, the conference A manager 33a of the SIP/SIMPLE server 3 registers the ID into the presence data storage 333a (step S325). Specifically, in the presence data storage 333a, the ID "ContentHandlerA@poc.fj.com" of the content acquisition virtual client 59 is registered to the presence data (Fig. 27) whose presence ID is "FetchRequestingUser".

Incidentally, when the ID of the content acquisition virtual client 59 is not included in the additional data of the acquisition request of the content transmission right, which was received from the user terminal A, the conference A manager 53a of the PoC management server 5 may activate or select an appropriate content acquisition virtual client 59. In addition, in certain circumstances, when the content acquisition virtual client 59 included in the additional data of the acquisition request of the content transmission right, which was received from the user terminal A can not be used, the conference A manager 53a of the PoC management server 5 may activate or select an appropriate content acquisition virtual client 59, similarly to a case where there is no designation.

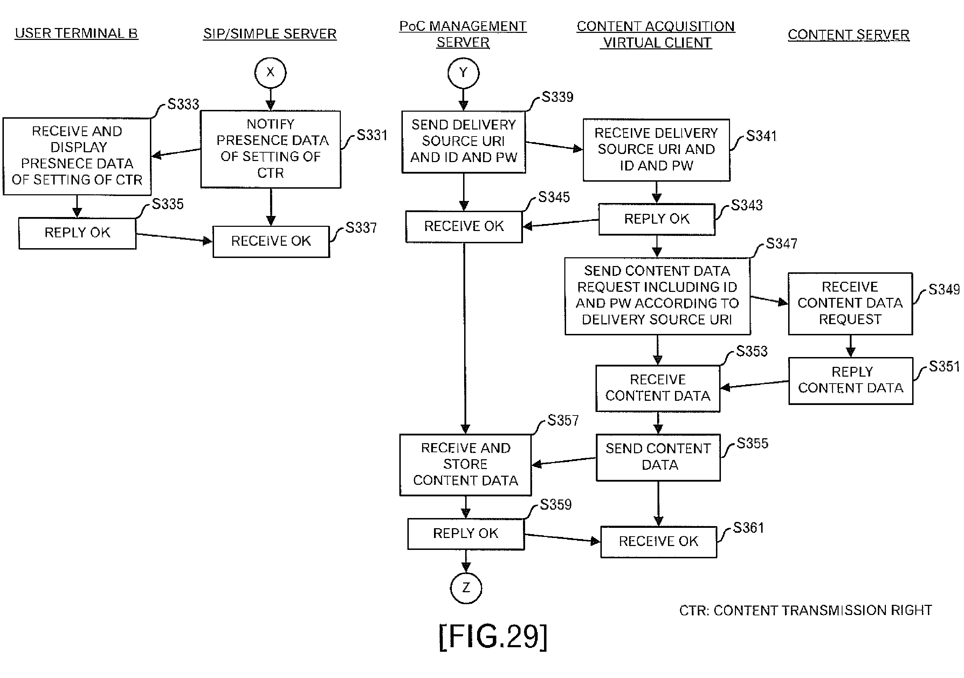

Then, the conference A presence manager 33a replies a notice of the registration completion to the PoC management server 5 (step S327). The conference A manager 53a of the PoC management server 5 receives the notice of the registration completion from the SIP/SIMPLE server 3 (step S329). The processing shifts to a processing of Fig. 29 through terminals X and Y.

First, the delivery processor 335a in the conference A presence manager 33a of the SIP/SIMPLE server 3 carries out a notification processing of the presence data representing has been set the content transmission right for the user ID (user A) of the user having the content transmission right according to the state of the presence data storage 333a (step S331). Here, the delivery processor 335a transmits the presence data whose presence ID is "SendingUser", which is stored in the presence data storage 333a. The presence data processor 915 of the user terminal B receives the presence data representing has been set the content transmission right from the SIP/SIMPLE server 3, and displays the presence data on the display device (step S333).

The presence data processor 915 of the user terminal B replies the OK response to the SIP/SIMPLE server 3 (step S335). The conference A manager 33a of the SIP/SIMPLE server 3 receives the OK response from the user terminal B (step S337).

In addition, the conference A manager 53a of the PoC management server 5 transmits, to the content acquisition virtual client 59, the URI of the content transmission source, which is included in the acquisition request of the content transmission right and the ID and password (when designated) included in the additional data, according to the ID of the content acquisition virtual client 59, which is included in the additional data of the acquisition request of the content transmission right (step S339). The content acquisition virtual client 59 receives the URI of the delivery source and the ID and password (when designated) from the conference A manager 53a of the PoC management server 5 (step S341)- In addition, the content acquisition virtual client 59 replies the OK response to the conference A manager 53a of the PoC management server 5 (step S343). The conference A manager 53a of the PoC management server 5 receives the OK response from the content acquisition virtual client 59 (step S345).

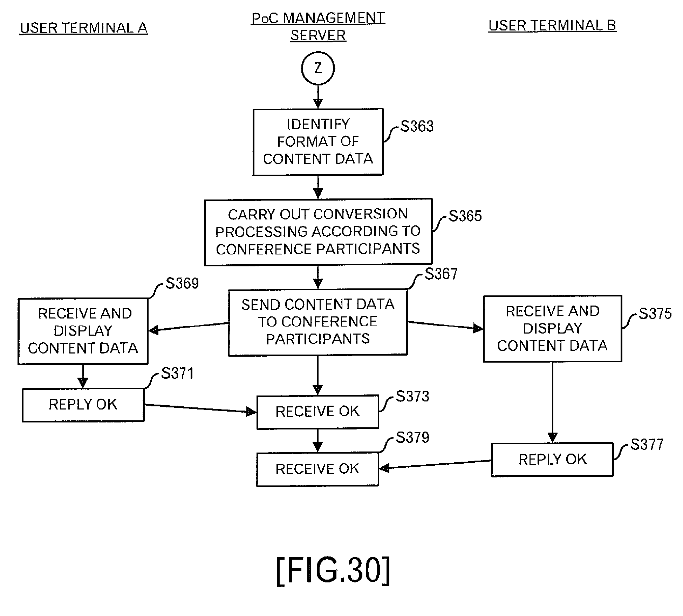

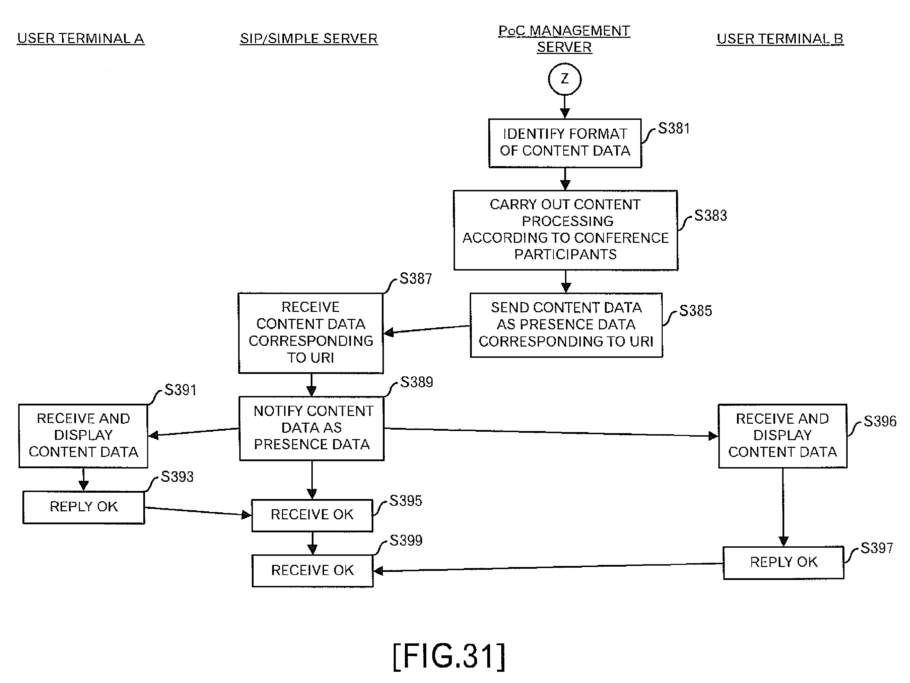

Furthermore, the content acquisition virtual client 59 transmits, to the content server 9, a content data request including the ID and password (when designated) according to the URI of the delivery source (step S347). When receiving the content data request including the ID and password (when designated) from the content acquisition virtual client 59 (step S349), the content server 9 carries out the well-known authentication processing by using the ID and password, reads out the pertinent content data from the content data storage 91 when the authentication succeeded, and transmits the content data to the content acquisition virtual client 59 (step S351). Incidentally, when the authentication is failed, or when the ID and password were not received even though the authentication is necessary, the content data is not transmitted. The content acquisition virtual client 59 receives the content data from the content server 9 (step S353), and further transmits the content data to the conference A manager 53a of the PoC management server 5 (step S355). When receiving the content data from the content acquisition virtual client 59, the conference A manager 53a of the PoC management server 5 stores the content data into the content data storage 535a (step S357). The conference A manager 53a of the PoC management server 5 replies the OK response to the content acquisition virtual client 59 (step S359). The content acquisition virtual client 59 receives the OK response from the conference A manager 53a of the PoC management server 5 (step S361) . Because the processing of the content acquisition virtual client 59 is completed at this stage, it becomes possible to respond to another request. In addition, the thread may be terminated. The processing shifts to the processing in Fig. 30 or Fig. 31 through a terminal Z.

By adopting such a configuration, even in a case where the authentication is required, such as a case where there is no cooperation relationship between the PoC management server 5 and the content server 9, it is possible to obtain the content data on behalf of the user A and deliver the content data to the conference participating users or the like.

Fig. 30 shows a processing flow in case where the obtained content data is delivered from the PoC management server 5. First, the content converter 56 of the PoC management server 5 identifies the data format of the content data stored in the content data storage 535a (step S363). In addition, the content converter 56 obtains data concerning the format (e.g. Fig. 24) or the like, which can be used by the conference participating users, from the conference A manager 53a, confirms whether or not the format of the received content data matches with the format, which can be used by the conference participating users, and carries out a conversion processing when the format of the content data does not match (step S365). The converted data is stored into the content data storage 535a. The processing to convert the content data into the format, which can be commonly used by the user terminals of the conference participating users may be carried out. Moreover, the transmission to the user terminal, for which it is judged that the received content data cannot be used, may be denied. Furthermore, the steps S363 and S365 may be skipped.

Then, the conference A manager 53a reads out the IP addresses and the like of the participants of the conference A, which are stored in the user data storage 533a, and transmits the content data usable in the user terminal A, which is stored in the content data storage 535a to the user terminal A (step S367). The content processor 913 of the user terminal A receives the content data from the PoC management server 5, and displays the content data on the display device (step S3369) . The content processor 913 in the client application 91 of the user terminal A replies the OK response to the PoC management server (step S371) . The conference A manager 53a of the PoC management server 5 receives the OK response from the user terminal B (step S373) . There is a case where the content data is not transmitted to the user terminal A of the user A having the content transmission right.

In addition, the conference A manager 53a transmits the content data usable in the user terminal B, which is stored in the content data storage 535a, to the user terminal B (step 5367). The content processor 913 of the user terminal B receives the content data from the PoC management server 5, and displays the content data on the display device (step S375). The content processor 913 in the client application 91 of the user terminal A replies the OK response to the PoC management server 5 (step S377) . The conference A manager 53a of the PoC management server 5 receives the OK response to the user terminal B (step S379).

Thus, it is possible to share the content with the user terminals of the conference participants and smoothly proceed with the conference.

In addition, because the content acquisition processing is shared with the content acquisition virtual clients 59, a configuration in which the load distribution is possible is adopted.

A processing as shown in Fig. 31 may be carried out instead of the processing of Fig. 30. Fig. 31 shows a case where the content data is delivered from the SIP/SIMPLE server 3.

First, the content converter 56 of the PoC management server 5 identifies the data format of the content data stored in the content data storage 535a (step S381). In addition, the content converter 56 obtains data concerning the format (e.g. Fig. 24) or the like usable in the conference participants from the conference A manager 53a, judges whether or not the format of the received content data can be used in the user terminals of the conference participating users, and converts the format into the common format usable for the all of the conference participating users when the format cannot be used (step S383). However, because there is no common format usable in all of the user terminals, the conversion into the format usable in more user terminals may be carried out. When it is judged that the format usable in all of the conference participants has already been obtained, the conversion processing is not carried out. The converted data is stored into the content data storage 535a. In addition, the transmission to the user terminal, for which it is judged that the received content data is unusable, may be disabled. Furthermore, the steps S381 and S383 may be skipped.

Then, the conference A manager 53a transmits the content data stored in the content data storage 535a as the presence data corresponding to the URI to the SIP/SIMPLE server 3 (step S385).

When receiving the content data corresponding to the URI from the PoC management server 5 (step S387), the conference A presence manager 33a of the SIP/SIMPLE server 3 presumes the update of the presence data, and carries out a processing to notify the content data as the presence data (step S389) . The presence data processor 915 in the client application 91 of the user terminal A receives the content data from the SIP/SIMPLE server 3, and outputs the content data to the content processor 913. The content processor 913 displays the received content data on the display device (step S391). In addition, the presence data processor 915 in the client application 91 of the user terminal A replies the OK response to the PoC management server 5 (step S393) . Moreover, the conference A presence manager 33a of the SIP/SIMPLE server 3 receives the OK response (step S395). Incidentally, the content data may not be sent to the user terminal A.

Furthermore, the conference A presence manager 33a of the SIP/SIMPLE server 3 presumes the update of the presence data, and notifies the user terminal A of the content data as the presence data (step S389) . The presence data processor 915 in the client application of the user terminal B receives the content data from the SIP/SIMPLE server 3, and outputs the content data to the content processor 913. The content processor 913 displays the received content data on the display device (step S396). In addition, the presence data processor 915 in the client application 91 of the user terminal B replies the OK response to the PoC management server 5 (step S397) . Moreover, the conference A presence manager 33a of the SIP/SIMPLE server 3 receives the OK response (step S399).

When the content converter 56 of the PoC management server 5 judges that a specific user terminal cannot use the content data, the data to instruct not to send the content data for the user ID of the specific user terminal may be notified to the PoC management server 5, and the conference A presence manager 33a of the SIP/SIMPLE server 3 may not deliver the content data. Thus, the bandwidth in the wireless section is not uselessly consumed.

When carrying out the processing as shown in Fig. 31, it is possible to deliver the content data to the conference participants by using the presence data notification mechanism.

As described above, although the embodiments of this invention are described, this invention is not limited to these. For example, the functional block diagrams are mere examples, and the actual configuration may be different from those. Not only the server configuration but also the functional blocks may not correspond to the actual program modules.

In addition, in the aforementioned example, it is shown, as an example, that the content converter 56 carries out the format conversion. However, for example, when there is limitation in the data size of the content data usable in the user terminal, the data size may be reduced, for example, by lowering the resolution, or adopting the nonreciprocal compression to increase the compression ratio.

Furthermore, the data as shown in Fig. 24 may also be held in the SIP/SIMPLE server 3, and the content data outputted from the conference A presence manager 33a may be converted to a format usable in the user terminals by referring to the data as shown in Fig. 24.

Incidentally, the SIP/SIMPLE server 3, the PoC management server 5, the PoC-MCU server 7 and the content server 9 are computer devices as shown in Fig. 32. That is, a memory 2501 (storage device), a CPU 2503 (processor), a hard disk drive (HDD) 2505, a display controller 2507 connected to a display device 2509, a drive device 2513 for a removal disk 2511, an input device 2515, and a communication controller 2517 for connection with a network are connected through a bus 2519 as shown in Fig- 32. An operating system (OS) and an application program for carrying out the foregoing processing in the embodiment, are stored in the HDD 2505, and when executed by the CPU 2503, they are read out from the HDD 2505 to the memory 2501. As the need arises, the CPU 2503 controls the display controller 2507, the communication controller 2517, and the drive device 2513, and causes them to perform necessary operations. Besides, intermediate processing data is stored in the memory 2501, and if necessary, it is stored in the HDD 2505. In this embodiment of this invention, the application program to realize the aforementioned functions is stored in the removal disk 2511 and distributed, and then it is installed into the HDD 2505 from the drive device 2513. It may be installed into the HDD 2505 via the network such as the Internet and the communication controller 2517. In the computer as stated above, the hardware such as the CPU 2503 and the memory 2501, the OS and the necessary application program are systematically cooperated with each other, so that various functions as described below in details are realized.

In addition, the user terminal can be represented by the similar configuration by providing a storage device such as a flash memory instead of the HDD 2505 and drive device 2513.

## Claims

1. A content delivery method in a teleconference, which is executed in a server for said teleconference, comprising:
a step of receiving a Uniform Resource Identifier (URI) of content data to be delivered to participating users participating in said teleconference, from a user terminal of a specific participating user;
an obtaining step of obtaining content data corresponding to said URI from a server relating to the received URI, and storing said content data into a content data storage device; and
a transmitting step of transmitting said content data stored in said content data storage device to user terminals of said participating user.

2. The content delivery method as set forth in claim 1, further comprising a confirming step of confirming whether or not said specific participating user has a content transmission right, and wherein said obtaining step is executed when said specific participating user has said content transmission right.

3. The content delivery method as set forth in claim 1, wherein said transmitting step comprises a step of transmitting said content data stored in said content data storage device as presence data in said teleconference to said user terminals of said participating users.

4. The content delivery method as set forth in claim 1, further comprising:
a step of receiving information concerning data usable in said user terminal of said participating user, and storing said information into a data storage device, when participating in said teleconference; and
a judging step of judging based on said information concerning said data usable in said user terminal of said participating user, which is stored in said data storage device, whether or not said content data stored in said content data storage device is content data usable in said user terminal of said participating user, and
wherein said transmitting step is executed for said user terminal for which affirmative judgment is made in said judging step.

5. The content delivery method as set forth in claim 1, further comprising:
a step of receiving information concerning data usable in said user terminal of said participating user, and storing said information into a data storage device, when participating in said teleconference;
a judging step of judging based on said information concerning said data usable in said user terminal of said participating user, which is stored in said data storage device, whether or not said content data is content data usable in said user terminal of said participating user; and
when negative judgment is made in said judging step, a step of converting said content data into content data usable in said user terminal of said participating user, based on said information concerning said data usable in said user terminal of said participating user, which is stored in said data storage device, and storing the converted content data into said content data storage device.

6. The content delivery method as set forth in claim 1, wherein said obtaining step comprises:
a step of transmitting an acquisition request including said URI to a virtual client;
a step of obtaining, by said virtual client, said content data corresponding to said URI from said server relating to said URI included in said acquisition request; and
a step of receiving said content data from said virtual client, and storing the received content data into said content data storage device.

7. The content delivery method as set forth in claim 1, further comprising:
a step of receiving authentication information for said server relating to said URI from said user terminal of said participating user, and
wherein said obtaining step comprises:
a step of transmitting an acquisition request including said URI and said authentication information for said server relating to said URI to a virtual client;
by said virtual client, a step of transmitting said authentication information to the server relating to said URI included in said acquisition request to make said server relating to said URI carry out an authentication processing, and acquiring said content data corresponding to said URI; and
a step of receiving said content data from said virtual client, and storing said content data into said content data storage device.

8. The content delivery method as set forth in claim 6, further comprising:
a step of receiving designation information of said virtual client form said user terminal of said specific participating user.

9. A content delivery method for causing a computer to execute claims 1 to 8.

10. A computer for a teleconference, comprising:
means for receiving a Uniform Resource Identifier (URI) of content data to be delivered to participating users participating in said teleconference, from a user terminal of a specific participating user;
means for obtaining content data corresponding to said URI from a server relating to the received URI, and storing said content data into a content data storage device; and
transmission means for transmitting said content data stored in said content data storage device to user terminals of said participating user.
